# FASCICULE DE BREVET EUROPEEN

(11) **EP 3 243 347 B1**
(45) Date de publication et mention de la délivrance du brevet: **12.12.2018**
(21) Numéro de dépôt: 15830824.7
(22) Date de dépôt: 30.12.2015
(51) Int. Cl.: H04W 40/36, H04W 28/02, H04L 12/721, H04L 12/715, H04L 12/801, H04L 29/06

(54) **DISPOSITIF ET PROCÉDÉ DE CONTRÔLE D'UN C UR DE RÉSEAU IP**
VORRICHTUNG UND VERFAHREN ZUR STEUERUNG EINES IP-KERNNETZWERKES
DEVICE AND METHOD FOR CONTROLLING AN IP CORE NETWORK

(30) Priorité: 05.01.2015 FR 1550037
(43) Date de publication de la demande: 15.11.2017
(73) Titulaire: Orange, 75015 Paris (FR)
(72) Inventeur: SAMA, Malla Reddy, 86159 Augsburg (DE)
(74) Mandataire: Fontenelle, Sandrine
(86) Numéro de dépôt international: PCT/FR2015/053779
(87) Numéro de publication internationale: WO 2016/110632

(56) Documents cités:
- WO-A1-2014/188136
- US-A1- 2014 254 373
- GEORG HAMPEL ET AL: "Applying Software-Defined Networking to the telecom domain", COMPUTER COMMUNICATIONS WORKSHOPS (INFOCOM WKSHPS), 2013 IEEE CONFERENCE ON, IEEE, 14 avril 2013 (2013-04-14), pages 133-138, XP032436447, DOI: 10.1109/INFCOMW.2013.6562893 ISBN: 978-1-4799-0055-8

## Description

### Arrière-plan de l'invention

L'invention se rapporte au domaine général des télécommunications et concerne plus particulièrement une nouvelle architecture de coeur de réseau IP (Internet Protocol).

Elle a ainsi une application privilégiée mais non limitative dans les efforts conduits aujourd'hui par le standard 3GPP pour définir le coeur de réseau EPC (Evolved Core Network) destiné à être utilisé au sein de l'architecture EPS (pour Evolved Packet System) proposée par le consortium.

On assiste depuis quelques années à une augmentation sans précédent du trafic des télécommunications mobiles, dynamisée par l'apparition de nouvelles applications mobiles, de nouveaux terminaux et de débits de communication de plus en plus élevés. Inversement, une étude récente souligne que les revenus des opérateurs diminuent de manière exponentielle en dépit de l'augmentation du trafic, les coûts de développement et d'exploitation des réseaux étant sur le point de dépasser les revenus engendrés par leur utilisation. Ceci s'explique en partie par le fait que les architectures de réseaux actuelles sont assez mal adaptées pour répondre à cette problématique duale de demande soutenue en termes de trafic tout en restant une source de revenus pour les opérateurs.

Dans ce contexte, l'architecture EPS (pour Evolved Packet System) a été définie par le consortium 3GPP pour fournir une connectivité IP entre un terminal d'un utilisateur et des réseaux externes de paquets de données (ou PDNs pour « Packet Data Networks »), aptes à offrir à ce terminal divers services de communication, tels que des services de voix sur IP ou VoIP (Voice over IP), de téléchargements de données, de vidéos à la demande, etc. Un tel réseau externe de paquets de données est par exemple le réseau public Internet ou un centre de données. Cette architecture est aujourd'hui en pleine évolution. Les modèles de trafic envisagés changent en effet de manière très dynamique et souvent imprédictible, de sorte que de nouvelles contraintes techniques et financières s'imposent aux opérateurs des réseaux de télécommunications.

L'un des enjeux majeurs de l'architecture EPS et plus particulièrement du coeur de réseau EPC (Evolved Packet Core) sur lequel repose cette architecture, est d'offrir un service de connectivité IP sur demande. Ce service s'appuie sur le transfert (ou « handover » en anglais) temporaire et transparent pour l'utilisateur de sessions de communication d'un équipement à un autre d'un réseau d'accès ou d'un réseau d'accès à un autre. Par transparent, on entend que ce transfert doit pouvoir être réalisé sans causer d'interruption des sessions de communication de l'utilisateur et en minimisant la perte des paquets de données échangés lors de ces sessions. Cette contrainte est particulièrement critique aujourd'hui dans les situations où l'on envisage une mobilité d'un terminal entre points d'accès d'un même réseau d'accès non licencié tel que par exemple un réseau WLAN, ou d'un réseau d'accès non licencié vers un réseau d'accès licencié tel qu'un réseau d'accès 3GPP.

Par réseau « licencié », on entend ici un réseau d'accès qui utilise un spectre de fréquences faisant l'objet de licences d'utilisation, tel que par exemple un réseau 2G/3G/4G ou encore 5G. Au contraire un réseau d'accès « non licencié » utilise des fréquences libres. Un tel réseau est par exemple un réseau WLAN ou WiFI (Wireless Fidelity).

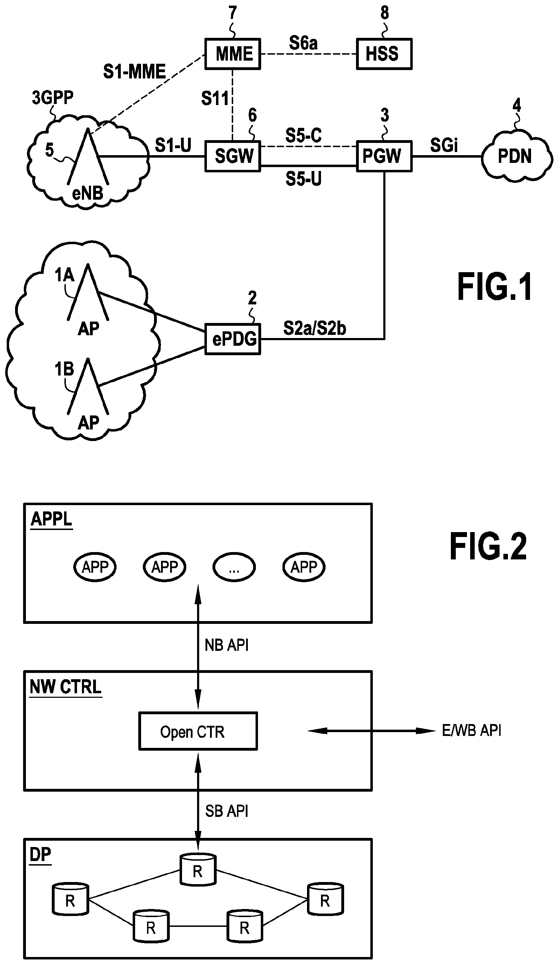

La **figure 1** illustre l'architecture de coeur de réseau EPC telle qu'elle est envisagée aujourd'hui par le standard 3GPP ainsi que les différents équipements sur laquelle elle s'appuie. A titre indicatif, les échanges prévus entre ces équipements pour le transfert des données (i.e. dans le plan de données ou plan utilisateur) sont modélisés par des traits pleins, tandis que les échanges de signalisation prévus entre ces équipements pour supporter ces transferts de données (i.e. dans le plan de contrôle ou de signalisation) sont modélisés par des traits discontinus.

Dans l'exemple envisagé à la figure 1, un point d'accès 1A d'un réseau d'accès non 3GPP est relié à une passerelle 2 de données ePDG (evolved Packet Data Gateway), via une interface de communication mettant en oeuvre un tunnel de communication établi selon le protocole IPsec (Internet Protocol security). La passerelle ePDG 2 est reliée via une interface de communication S2a/S2b à une passerelle 3 d'interconnexion PGW (PDN GateWay) avec un réseau externe 4 de paquets de données. L'interface de communication S2a/S2b s'appuie sur l'établissement d'un tunnel de communication selon le protocole de communication GTP (GPRS Tunneling Protocol) ou selon le protocole PMIP (Proxy Mobile IP Protocol). La passerelle PGW 3 et le réseau externe 4 sont reliés via une interface de communication SGi.

Selon cette architecture, une station de base 5 d'un réseau d'accès 3GPP (ex. LTE ou eUTRAN) est reliée à une passerelle 6 de transfert de données SGW (Serving GateWay) via une interface de communication S1-U, et à un équipement 7 de gestion de la mobilité des terminaux MME (Mobile Management Entity) par l'intermédiaire d'une interface de communication S1-MME.

La passerelle SGW 6 est reliée à la passerelle PGW 3 via une interface de communication S5 (comprenant la signalisation S5-U supportant les échanges de données dans le plan utilisateur et la signalisation S5-C supportant les échanges de données dans le plan de contrôle). Cette interface de communication S5 s'appuie également sur le protocole de communication GTP (GPRS Tunneling Protocol). La passerelle SGW 6 est également reliée à l'équipement MME 7 via une interface de communication S11.

L'équipement MME 7 est en charge d'assurer la connectivité IP des terminaux lorsque ceux-ci sont en situation de mobilité dans le réseau d'accès 3GPP. Il est connecté, via une interface de communication S6a, à une base de données utilisateurs 8 autrement appelée serveur d'abonnés du réseau HSS (pour « Home Subscriber Server »).

On considère, dans ce contexte, un utilisateur connecté via son terminal au réseau d'accès non-3GPP par l'intermédiaire du point d'accès 1A. Cet utilisateur participe à une ou plusieurs sessions de communication établies entre le point d'accès 1A et la passerelle PGW 3 d'interconnexion au réseau externe 4, et transitant par la passerelle ePDG 2.

Dans l'architecture telle qu'elle est prévue aujourd'hui par le consortium 3GPP et illustrée à la figure 1, si le terminal découvre un nouveau point d'accès 1B du réseau d'accès non-3GPP et se connecte à ce nouveau point d'accès, toutes les sessions actives du terminal établies via le point d'accès 1A sont interrompues et doivent être ré-établies, et ce que le point d'accès 1B soit relié ou non à la même passerelle ePDG 2 que le point d'accès 1A. Il en est de même lorsque le terminal se connecte à un autre réseau d'accès, et en particulier à une station de base 5 du réseau d'accès 3GPP.

Ces interruptions des sessions de communication du terminal résultent d'une part, en une mauvaise qualité d'expérience (ou QoE pour Quality of Expérience) vécue par l'utilisateur du terminal, et d'autre part, en une signalisation importante sur le réseau pour ré-établir les sessions qui peut induire une période de congestion temporaire du réseau.

L'architecture EPC telle qu'elle est conçue aujourd'hui n'offre pas ou peu de flexibilité pour pouvoir pallier ces difficultés et offrir un service de connectivité IP à la demande. En effet, les différents équipements de l'architecture EPC précédemment décrite, à savoir notamment l'équipement MME 7, la passerelle SGW 6, la passerelle PGW 3, la passerelle ePDG 2 et le serveur d'abonnés HSS 8 sont prévus sur des équipements matériels (« hardware ») qui sont déployés, provisionnés et configurés de manière statique, et dont il est difficile de changer le comportement. En outre, ces équipements présentent un couplage étroit d'une part, des aspects matériels et logiciels, et d'autre part, du plan utilisateur et du plan de contrôle (signalisation), qui ne peuvent pas être modifiés de manière dynamique et n'offrent ainsi aucune flexibilité.

Par conséquent, il existe un besoin d'une architecture de coeur de réseau IP qui ne présente pas de tels inconvénients et permet de fournir à un service de connectivité IP à la demande aux utilisateurs avec une qualité d'expérience adaptée à leurs besoins et leurs attentes.

Le document WO2014/1488136 décrit une architecture de coeur de réseau sur IP dans laquelle les plans de données et de contrôle sont découplés.

Le document de G. Hampel et al. Intitulé « Applying software-defined networking to the telecom domain », IEEE Computer Communications Workshops, 14 avril 2013, pages 133-138, décrit l'application des principes SDN des réseaux définis par logiciel au domaine des télécommunications.

### Objet et résumé de l'invention

L'invention répond notamment à ce besoin en proposant un dispositif de contrôle d'un coeur de réseau IP comprenant au moins une passerelle d'interconnexion à au moins un réseau externe de paquets de données et une pluralité de commutateurs, chaque commutateur étant relié à au moins un point d'accès d'un réseau d'accès, le dispositif de contrôle comprenant :
- un module de communication apte à communiquer avec une entité de contrôle des commutateurs et/ou avec une entité de contrôle de ladite au moins une passerelle d'interconnexion, le module de communication étant configuré pour obtenir de ces entités de contrôle des paramètres de communication destinés à être utilisés lors d'une session de communication d'un terminal, ce terminal étant connecté à un point d'accès du réseau d'accès, ces paramètres de communication comprenant au moins un paramètre de communication relatif à un tunnel de communication entre un commutateur relié au point d'accès et le terminal établi pour ladite session selon un premier protocole de communication et au moins un paramètre de communication relatif à un tunnel de communication entre le commutateur et une passerelle d'interconnexion reliée à ce commutateur établi pour ladite session selon un second protocole de communication distinct du premier protocole ;
- un module de contrôle, configuré pour élaborer à partir d'au moins un paramètre de communication obtenu par le module de communication, au moins une règle de traitement de flux de données relatifs à la session de communication, cette règle de traitement étant destinée à être appliquée par un équipement parmi ladite passerelle d'interconnexion, ledit commutateur et/ou le point d'accès ; et
- un module de transmission de ladite au moins une règle de traitement à cet équipement pour application sur les flux de données relatifs à ladite session de communication.

Corrélativement, l'invention vise également un procédé de contrôle d'un coeur de réseau IP comprenant au moins une passerelle d'interconnexion à au moins un réseau externe de paquets de données et une pluralité de commutateurs, chaque commutateur étant relié à au moins un point d'accès d'un réseau d'accès, le procédé de contrôle étant destiné à être mis en oeuvre par un dispositif de contrôle et comprenant :
- une étape de communication avec une entité de contrôle des commutateurs et/ou avec une entité de contrôle de ladite au moins une passerelle d'interconnexion, comprenant l'obtention en provenance de ces entités de contrôle de paramètres de communication destinés à être utilisés lors d'une session de communication d'un terminal, ce terminal étant connecté à un point d'accès du réseau d'accès, ces paramètres de communication comprenant au moins un paramètre de communication relatif à un tunnel de communication entre un commutateur relié au point d'accès et le terminal établi pour ladite session selon un premier protocole de communication et au moins un paramètre de communication relatif à un tunnel de communication entre le commutateur et une passerelle d'interconnexion reliée à ce commutateur établi pour ladite session selon un second protocole de communication distinct du premier protocole ;
- une étape de contrôle comprenant l'élaboration, à partir d'au moins un paramètre de communication obtenu lors de l'étape de communication, d'au moins une règle de traitement de flux de données relatifs à la session de communication, cette règle de traitement étant destinée à être appliquée par un équipement parmi ladite passerelle d'interconnexion, ledit commutateur et/ou le point d'accès ; et
- une étape de transmission de ladite au moins une règle de traitement à cet équipement pour application sur les flux de données relatifs à ladite session de communication.

Par session de communication, on entend ici une session initiée par le terminal ou par le coeur de réseau dans le cadre d'un service offert par un réseau externe de paquets de données géré par le coeur de réseau. Cette session de communication est le support d'un échange de données entre le terminal et le réseau externe via le coeur de réseau. Chaque session de communication est associée à une qualité de service qui dépend du type de trafic échangé lors de la session (ex. session FTP (File Transfer Protocol), session de communication de voix sur IP, etc.).

Par ailleurs, par flux de données relatifs à une session de communication, on entend ici des flux de données échangés lors de cette session en liaison montante (du terminal vers le réseau externe) ou en liaison descendante (du réseau externe vers le terminal).

L'invention propose ainsi une architecture de coeur de réseau s'appuyant sur les principes du réseau défini par logiciel ou SDN (Software Defined Network) et dans laquelle les plans utilisateur (ou encore usager ou de données) et de contrôle (ou de signalisation) sont découplés. Cette architecture offre avantageusement une meilleure flexibilité du coeur de réseau et permet de pouvoir répondre de manière satisfaisante en termes notamment de qualité d'expérience des utilisateurs à une demande de connectivité IP croissante.

Conformément à l'invention, l'intelligence du coeur de réseau (c'est-à-dire les fonctions de contrôle) est centralisée au niveau d'un dispositif de contrôle, par exemple logiciel. Le plan utilisateur et le comportement des équipements du réseau participant à ce plan utilisateur sont définis par des règles de traitement ou de transmission des données (i.e. du trafic) relatives aux terminaux gérés par le coeur de réseau, élaborées par le dispositif de contrôle. Il en résulte une nouvelle architecture de coeur de réseau IP programmable, qui permet une (re)configuration dynamique du plan utilisateur et du plan de contrôle en fonction de la demande.

Plus précisément, l'invention propose d'établir et de commander, par l'intermédiaire du dispositif de contrôle, un plan utilisateur qui s'appuie sur des passerelles d'interconnexion du coeur de réseau IP à des réseaux externes de paquets de données, des commutateurs déployés dans le coeur de réseau IP, et des points d'accès d'un réseau d'accès reliés aux commutateurs. L'invention s'applique ainsi de façon privilégiée à un réseau d'accès non licencié tel qu'un réseau d'accès non-3GPP et plus particulièrement un réseau WLAN, qui utilise des équipements similaires pour le plan utilisateur. Les points d'accès, les commutateurs et les passerelles d'interconnexion sont, conformément à l'invention, connectés directement au dispositif de contrôle, ce qui facilite le contrôle exercé par ce dernier sur ces équipements.

L'invention permet en outre de gérer de façon transparente la mobilité des terminaux au sein du réseau d'accès d'un point d'accès à un autre. En effet, l'invention prévoit l'attribution de paramètres de communication à une session de communication d'un terminal qui permet de tenir compte de la mobilité du terminal et de son changement de cas échéant de point d'accès, de commutateur ou encore de passerelle d'interconnexion durant la session, autrement dit qui permet de s'adapter à un changement du plan utilisateur. Ces paramètres de communication incluent notamment, pour répondre à la problématique spécifique des réseaux non licenciés tels que les réseaux WLAN :
- un paramètre de communication relatif à un tunnel de communication entre un commutateur relié au point d'accès et le terminal établi pour ladite session selon un premier protocole de communication (typiquement IPsec) ; et
- un paramètre de communication relatif à un tunnel de communication entre le commutateur et une passerelle d'interconnexion reliée à ce commutateur établi pour cette session selon un second protocole de communication distinct du premier protocole (typiquement GTP ou PMIP).

Les règles de traitement transmises par le dispositif de contrôle logiciel sont avantageusement élaborées par celui-ci à partir des paramètres de communication résultant d'interactions avec les fonctions de contrôle du réseau, et notamment avec une entité de contrôle des passerelles d'interconnexion et une entité de contrôle des commutateurs. Le dispositif de contrôle peut par ailleurs interagir avec d'autres fonctions de contrôle pour établir ces règles de traitement telles que par exemple une fonction DHCP (Dynamic Host Configuration Protocol), un serveur HSS/AAA, etc. Dans une solution logicielle, ces fonctions de contrôle se situent par exemple au-dessus du dispositif de contrôle et communiquent avec celui-ci par l'intermédiaire d'interfaces de programmation ou API (Application Programming Interface).

Comme mentionné précédemment, l'architecture proposée par l'invention offre la possibilité de mettre à jour facilement les règles de traitement qui permettent au dispositif de contrôle de contrôler le plan utilisateur en agissant directement au niveau de ces équipements. La gestion du coeur de réseau, et en particulier les procédures d'établissement et de maintien des sessions de communication au sein du coeur de réseau en cas de mobilité entre des points d'accès différents d'un même réseau d'accès, sont donc grandement simplifiées. Grâce à ce contrôle centralisé, le dispositif de contrôle peut ainsi, en adaptant de façon adéquate les règles de traitement par le biais desquelles il contrôle les équipements du plan utilisateur, offrir aisément un service de connectivité IP répondant à la demande des utilisateurs et s'appuyant sur une mobilité des terminaux sans interruption (i.e. sans couture ou « seamless » en anglais) et donc transparente pour ces derniers. L'expérience des utilisateurs est ainsi améliorée et privilégiée.

Différents paramètres de communication peuvent être obtenus par le dispositif de contrôle et utilisés pour élaborer les règles de traitement lui permettant de contrôler les équipements du plan utilisateur.

Ainsi, selon une variante, le module de communication peut être configuré pour obtenir de l'entité de contrôle des commutateurs au moins un paramètre de communication parmi:
- une adresse du commutateur relié au point d'accès auquel est connecté le terminal ;
- un identifiant d'un point d'extrémité ou une clé d'encapsulation de routage générique du tunnel de communication selon le second protocole entre le commutateur et la passerelle d'interconnexion ; et
- au moins une clé cryptographique associée au tunnel de communication selon le premier protocole entre le commutateur et le terminal.

Selon une autre variante, le module de communication peut être configuré pour obtenir de l'entité de contrôle de ladite au moins une passerelle d'interconnexion un identifiant d'un point d'extrémité du tunnel de communication selon le second protocole entre le commutateur et la passerelle d'interconnexion.

Ces différents paramètres permettent de répondre à différentes situations de mobilité du terminal.

En outre, dans un mode particulier de réalisation, au moins un paramètre de communication relatif au tunnel de communication selon le premier protocole ou au tunnel de communication selon le second protocole est invariant au cours de la session de communication du terminal.

Cela permet de limiter la signalisation échangée dans le coeur de réseau pour établir et maintenir une session de communication du terminal, en particulier dans des situations de mobilité du terminal et de transfert (handover) de sa session de communication.

Comme mentionné précédemment, les paramètres de communication obtenus par le dispositif de contrôle lui permettent d'élaborer des règles de traitement répondant à différentes situations d'un terminal vis-à-vis du coeur de réseau.

Ainsi, dans un mode particulier de réalisation de l'invention, le module de contrôle est configuré pour élaborer, lors d'une procédure d'attachement du terminal au point d'accès du réseau d'accès :
- une règle de traitement des flux de données provenant du terminal, destinée à être appliquée par le commutateur et comprenant :
   ∘ une adresse de la passerelle d'interconnexion ; et
   ∘ un identifiant d'un point d'extrémité ou une clé d'encapsulation de routage générique du tunnel de communication selon le second protocole entre le commutateur et la passerelle d'interconnexion ;
- une règle de traitement des flux de données à destination du terminal, destinée à être appliquée par le commutateur et comprenant :
   ∘ une adresse du point d'accès ; et
   ∘ au moins une clé cryptographique associée au tunnel de communication selon le premier protocole entre le commutateur et le terminal ;
- une règle de traitement des flux de données provenant du terminal, destinée à être appliquée par la passerelle d'interconnexion et comprenant un identifiant d'un réseau externe de paquets de données ;
- une règle de traitement des flux de données à destination du terminal, destinée à être appliquée par la passerelle d'interconnexion et comprenant :
   ∘ une adresse du commutateur ; et
   ∘ un identifiant d'un point d'extrémité ou une clé d'encapsulation de routage générique du tunnel de communication selon le second protocole entre le commutateur et la passerelle d'interconnexion ;
- une règle de traitement des flux de données provenant du terminal, destinée à être appliquée par le point d'accès et comprenant une adresse du commutateur ; et
- une règle de traitement des flux de données à destination du terminal, destinée à être appliquée par le point d'accès et comprenant une adresse du terminal.

Dans un autre mode de réalisation, le module de contrôle est configuré pour élaborer, lors d'une procédure de transfert de la session de communication du terminal d'un premier point d'accès à un second point d'accès du réseau d'accès, le premier point d'accès et le second point d'accès étant reliés au même commutateur :
- une règle de traitement des flux de données à destination du terminal, destinée à être appliquée par le commutateur et comprenant une adresse du second point d'accès ;
- une règle de traitement des flux de données provenant du terminal, destinée à être appliquée par le second point d'accès et comprenant une adresse du commutateur.

Dans un autre mode de réalisation encore, le module de contrôle est configuré pour élaborer, lors d'une procédure de transfert de la session de communication du terminal d'un premier point d'accès relié à un premier commutateur vers un second point d'accès du réseau d'accès relié à un second commutateur :
- une règle de traitement des flux de données à destination du terminal, destinée à être appliquée par la passerelle d'interconnexion et comprenant :
   ∘ une adresse du second commutateur ; et
   ∘ un identifiant d'un point d'extrémité ou une clé d'encapsulation de routage générique du tunnel de communication selon le second protocole entre la passerelle d'interconnexion et le second commutateur ;
- une règle de traitement des flux de données provenant du terminal, destinée à être appliquée par le second commutateur et comprenant :
   ∘ une adresse de la passerelle d'interconnexion ; et
   ∘ un identifiant d'un point d'extrémité ou une clé d'encapsulation de routage générique du tunnel de communication selon le second protocole entre le second commutateur et la passerelle d'interconnexion ;
- une règle de traitement des flux de données à destination du terminal destinée à être appliquée par le second commutateur et comprenant l'adresse du second point d'accès ; et
- une règle de traitement des flux de données provenant du terminal, destinée à être appliquée par le second point d'accès et comprenant une adresse du second commutateur.

L'invention offre ainsi une architecture qui permet de répondre efficacement à différentes situations de mobilité du terminal au sein du coeur de réseau, lorsque celui-ci se déplace au sein du même réseau d'accès.

L'invention permet également de gérer les situations de mobilité du terminal dans lesquelles ce dernier passe d'un réseau d'accès (ex. WLAN) à un autre (ex. 3GPP ou LTE ou E-UTRAN).

A cet effet, dans un mode particulier de réalisation de l'invention :
- le module de contrôle est en outre configuré pour élaborer au moins une règle de traitement destinée à être appliquée par au moins une station de base d'un autre réseau d'accès à des flux de données relatifs à la session de communication ; et
- le module de transmission est configuré pour transmettre cette règle de traitement à ladite au moins une station de base pour application sur ces flux de données.

Autrement dit, le dispositif de contrôle est apte à contrôler non seulement les points d'accès d'un réseau d'accès tel qu'un réseau WLAN, mais également des stations de base d'un autre réseau d'accès tel qu'un réseau 3GPP. L'invention propose ainsi une architecture de coeur de réseau IP hybride permettant de supporter des technologies d'accès différentes et dans laquelle les plans utilisateur (ou encore usager ou de données) et de contrôle (ou de signalisation) sont avantageusement découplés.

Cette architecture est particulièrement bien adaptée pour supporter la convergence des réseaux fixes et mobiles. Il en résulte une flexibilité de la gestion du coeur de réseau et une amélioration de la fiabilité de la connectivité IP offerte aux terminaux par celui-ci.

Dans ce mode de réalisation, pour supporter un transfert de la session de communication du terminal entre les deux réseaux d'accès, le module de contrôle peut être configuré pour élaborer, lors d'une procédure de transfert de la session de communication du terminal d'un point d'accès du réseau d'accès vers la station de base :
- une règle de traitement des flux de données provenant du terminal, destinée à être appliquée par la passerelle d'interconnexion et comprenant un identifiant d'un réseau externe de paquets de données ;
- une règle de traitement des flux de données à destination du terminal, destinée à être appliquée par la passerelle d'interconnexion et comprenant :
   ∘ une adresse de la station de base ; et
   ∘ un identifiant d'un point d'extrémité d'un tunnel de communication entre la passerelle d'interconnexion et la station de base établi pour la session du terminal selon le second protocole;
- une règle de traitement de flux de données provenant du terminal, destinée à être appliquée par la station de base et comprenant :
   ∘ une adresse de la passerelle d'interconnexion ; et
   ∘ un identifiant d'un point d'extrémité du tunnel de communication selon le second protocole entre la station de base et la passerelle d'interconnexion.

Le module de communication peut en outre être configuré pour communiquer avec une entité de gestion de la mobilité dans ledit autre réseau d'accès et à obtenir de cette entité l'adresse de la station de base.

Dans les différentes situations de transfert de session (handover) précédemment décrites, le module de contrôle peut en outre être configuré pour élaborer une règle de traitement des flux de données à destination du terminal destinée à être appliquée par le second point d'accès et comprenant une adresse du terminal.

En variante, cette adresse peut être communiquée par le terminal au second point d'accès lors d'une phase de préparation du transfert de la session.

Comme mentionné précédemment, l'invention propose une nouvelle architecture de coeur de réseau IP qui s'appuie sur un dispositif de contrôle mais également sur diverses entités de contrôle interagissant avec ce dispositif de contrôle et lui permettant de commander le plan utilisateur.

Ainsi, l'invention vise également une entité de contrôle d'une pluralité de commutateurs d'un coeur de réseau IP, chaque commutateur étant relié à une passerelle d'interconnexion avec un réseau externe de paquets de données et à au moins un point d'accès d'un réseau d'accès, cette entité de contrôle comprenant :
- un premier module d'allocation, configuré pour allouer à une session de communication d'un terminal connecté à un point d'accès du réseau d'accès, au moins un paramètre de communication relatif à un tunnel de communication entre un commutateur relié au point d'accès et le terminal établi pour cette session de communication selon un premier protocole de communication ; et
- un second module d'allocation, configuré pour allouer à cette session de communication, au moins un paramètre de communication relatif à un tunnel de communication entre le commutateur et une passerelle d'interconnexion reliée à ce commutateur établi pour cette session de communication selon un second protocole de communication distinct du premier protocole.

Dans un mode de réalisation particulier, cette entité de contrôle comprend en outre un module de sélection d'un commutateur du coeur de réseau IP pour la session de communication du terminal.

L'invention vise aussi un coeur de réseau IP comprenant :
- au moins une passerelle d'interconnexion avec au moins un réseau externe de paquets de données ;
- une pluralité de commutateurs reliés à ladite au moins une passerelle d'interconnexion et à des points d'accès d'un réseau d'accès ;
- une entité de contrôle de ladite au moins une passerelle d'interconnexion ;
- une entité de contrôle des commutateurs ; et
- au moins un dispositif de contrôle du coeur de réseau IP selon l'invention, apte à commander la passerelle d'interconnexion, la pluralité de commutateurs, et les points d'accès du réseau d'accès.

L'entité de contrôle et le coeur de réseau IP bénéficient des mêmes avantages que le dispositif de contrôle.

Dans un mode particulier de réalisation, les différentes étapes du procédé de contrôle sont déterminées par des instructions de programmes d'ordinateurs.

En conséquence, l'invention vise aussi un programme d'ordinateur sur un support d'informations, ce programme étant susceptible d'être mis en oeuvre dans un dispositif de contrôle ou plus généralement dans un ordinateur, ce programme comportant des instructions adaptées à la mise en oeuvre des étapes d'un procédé de contrôle tel que décrit ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

On peut également envisager, dans d'autres modes de réalisation, que le procédé de contrôle, le dispositif de contrôle, l'entité de contrôle des commutateurs, et le coeur de réseau IP selon l'invention présentent en combinaison tout ou partie des caractéristiques précitées.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 déjà décrite, représente de façon schématique une architecture d'un coeur de réseau EPC telle que proposée par le standard 3GPP ;
- les figures 2 et 3 illustrent les principes d'un réseau défini par logiciel (SDN) ;
- la figure 4 représente un coeur de réseau IP conforme à l'invention, dans un mode particulier de réalisation ;
- la figure 5 représente l'architecture matérielle d'un dispositif informatique comprenant un dispositif de contrôle conforme à l'invention ; et
- les figures 6 à 9 représentent des procédures d'attachement et de transferts de session d'une communication d'un terminal mises en oeuvre conformément à l'invention par le coeur de réseau IP illustré à la figure 4.

### Description détaillée de l'invention

Comme mentionné précédemment, l'invention propose une nouvelle architecture de coeur de réseau IP permettant la mobilité des terminaux et s'appuyant sur le concept SDN de réseau défini par logiciel. Cette nouvelle architecture permet avantageusement d'améliorer la flexibilité et la fiabilité en termes de connectivité IP du coeur de réseau. Elle facilite en effet la mise en oeuvre de procédures de transfert de sessions de communication entre différents points d'accès d'un même réseau d'accès, mais également entre des réseaux d'accès différents (dans un contexte de convergence des réseaux fixes et mobiles par exemple), et ce, de manière transparente pour les utilisateurs c'est-à-dire sans interruption des sessions.

Plus précisément, l'invention définit un nouveau plan de contrôle selon lequel une pluralité d'équipements parmi lesquels des passerelles d'interconnexion et des commutateurs du coeur de réseau, des points d'accès d'un réseau d'accès, et le cas échéant des stations de base d'un autre réseau d'accès, participant au plan utilisateur, sont commandées par un dispositif de contrôle. Dans le mode de réalisation décrit ici, ce dispositif de contrôle est un dispositif de contrôle logiciel, relié par l'intermédiaire d'une interface de programmation (ou API pour Application Programming Interface) à diverses fonctions de contrôle du réseau, et plus particulièrement à une entité de contrôle des passerelles d'interconnexion et à une entité de contrôle des commutateurs du coeur de réseau.

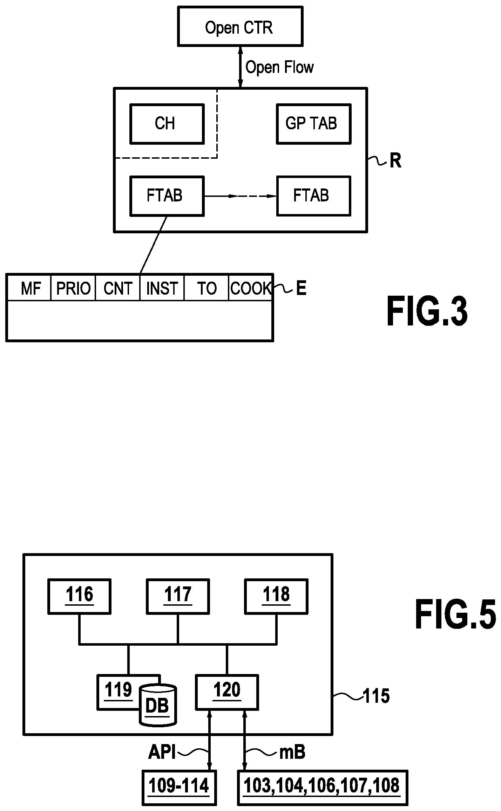

Pour faciliter la compréhension de l'invention, nous allons dans un premier temps rappeler brièvement, en référence aux figures 2 et 3, les principes généraux d'une architecture SDN. Dans l'exemple retenu pour illustrer ces principes, on suppose que cette architecture repose sur l'utilisation du protocole OpenFlow, connu de l'homme du métier et décrit notamment dans le document « Openflow switch spécification, version 1.3.1 », Septembre 2012.

Comme mentionné précédemment, le concept SDN permet de spécifier le comportement d'équipements réseau à l'aide de programmes de contrôle haut niveau, ce qui permet d'automatiser aisément certaines tâches comme la configuration des équipements du réseau ou la gestion des politiques appliquées au niveau du réseau.

A cet effet, l'architecture SDN centralise l'intelligence du réseau (i.e. les fonctions de contrôle du réseau et de ses équipements) dans un dispositif de contrôle (ou contrôleur) logiciel.

Le comportement des équipements du réseau tels que des commutateurs ou des routeurs en présence de données relatives à une session de communication est alors défini par le dispositif de contrôle au moyen de règles dites de traitement qu'il transmet aux équipements du réseau. Ces règles sont stockées par les équipements du réseau et sont destinées à être appliquées par ceux-ci sur réception de données relatives à une session de communication. Elles spécifient par exemple les équipements du réseau vers lesquels transférer les données (i.e. le trafic) en liaisons montante et descendante, les actions à réaliser sur ces données, etc.

La **figure 2** résume ce mode de fonctionnement en modélisant schématiquement une architecture SDN selon trois couches :
- une couche inférieure DP, modélisant le plan de données (plan utilisateur) et comprenant les commutateurs/routeurs R du réseau commandés (contrôlés) par le dispositif de contrôle (ces commutateurs/routeurs R peuvent être indifféremment physiques ou virtuels) ;
- une couche intermédiaire NW CTRL, modélisant à proprement parler le dispositif de contrôle logiciel référencé par « OpenCTR » ; et
- une couche supérieure APPL, modélisant diverses applications ou fonctions de contrôle APP utilisées par le dispositif de contrôle OpenCTR pour commander les commutateurs/routeurs R du plan de données DP et élaborer les règles de traitement.

Les différentes couches précitées communiquent entre elles via des interfaces de programmation ou API appelées « NorthBound API » et « SouthBound API » (notées respectivement « NB API » et « SB API » sur la figure 2). Le dispositif de contrôle OpenCTR communique par ailleurs avec d'autres contrôleurs via des interfaces de programmation appelées « East/West Bound API » (et notées « E/WB API » sur la figure 2).

Les interfaces de programmation SB API entre le dispositif de contrôle OpenCTR et le plan de données implémentent ici le protocole de communication OpenFlow. Les interfaces de programmation NB API et E/WB API sont basées sur n'importe quel protocole de communication ouvert, choisi par exemple parmi les protocoles connus SOAP (pour « Simple Object Access Protocol »), RPC (pour « Remote Procédure Call ») ou REST (pour « Representational State Transfer »).

Comme rappelé précédemment et illustré à la **figure 3**, le protocole OpenFlow permet au dispositif de contrôle logiciel OpenCTR de commander aisément chaque commutateur/routeur R au moyen d'un ensemble de règles de traitement de données, incluant notamment des règles de transmission (ou de transfert ou encore de routage) de données destinées à être appliquées par le commutateur/routeur R sur réception de données relatives à une session de communication (autrement dit, échangées lors d'une session de communication).

Ces règles de traitement sont déterminées par le dispositif de contrôle OpenCTR en fonction par exemple de la politique de l'opérateur envisagée pour la gestion du réseau. Elles spécifient le traitement devant être appliqué par chaque commutateur/routeur R sur réception d'un paquet d'un flux de données associé à une session de communication d'un terminal déterminé, et des paquets suivants associés au même flux.

Ces règles de traitement sont stockées au niveau de chaque commutateur/routeur R sous la forme de tables de flux FTAB (ou « flow tables » en anglais), dont les entrées peuvent être aisément modifiées par le dispositif de contrôle OpenCTR à l'aide du protocole OpenFlow (ex. ajout, mise à jour, suppression d'entrées dans la table).

A titre illustratif, une entrée E d'une telle table de flux FTAB est représentée sur la figure 3. Elle se présente sous la forme de plusieurs champs ou paramètres destinés à être examinés par le commutateur/routeur R sur réception d'un paquet de données pour identifier quel traitement appliquer sur ce paquet (ex. vers quel équipement du coeur de réseau transférer le paquet de données). Ces champs incluent par exemple un champ MF (pour « Match Fields ») indiquant les champs de l'entête des paquets concernés par cette entrée E de la table, ainsi qu'un champ INST (pour « Instructions ») définissant le traitement à appliquer sur les paquets dont l'entête comprend les champs identifiés par MF. D'autres champs peuvent bien entendu être également définis pour chaque entrée de la table FTAB en sus de ces deux champs, comme illustré sur la figure 3, tels que par exemple un champ TO (pour « Time Out), PRIO (pour « Priority »), COOK (pour « Cookie ») ou CNT (pour « Counters »).

Le commutateur/routeur R utilise les tables de flux FTAB ainsi définies de la façon suivante.

Sur réception d'un paquet de données, il cherche dans les tables FTAB stockées si le champ MF d'une entrée coïncide avec les champs de l'entête de ce paquet.

Le cas échéant, les instructions associées à cette entrée spécifiées dans le champ INST correspondant sont exécutées par le commutateur/routeur R sur le paquet de données (ex. transférer le paquet vers un équipement déterminé du réseau identifié par des paramètres tels que son adresse IP et/ou un port UDP, ou modifier ou supprimer le paquet).

Si en revanche, aucune entrée ne coïncide avec le paquet reçu, celui-ci est transféré vers le dispositif de contrôle OpenCTR qui crée une nouvelle entrée de table de flux et un traitement associé à cette entrée (autrement dit une nouvelle règle de traitement), et la transmet au commutateur/routeur R pour qu'il la stocke dans une table de flux associée au terminal.

On comprend bien dès lors, au vu du mode de fonctionnement qui vient d'être décrit, que selon une architecture de réseau SDN, les plans de contrôle et de données sont découplés.

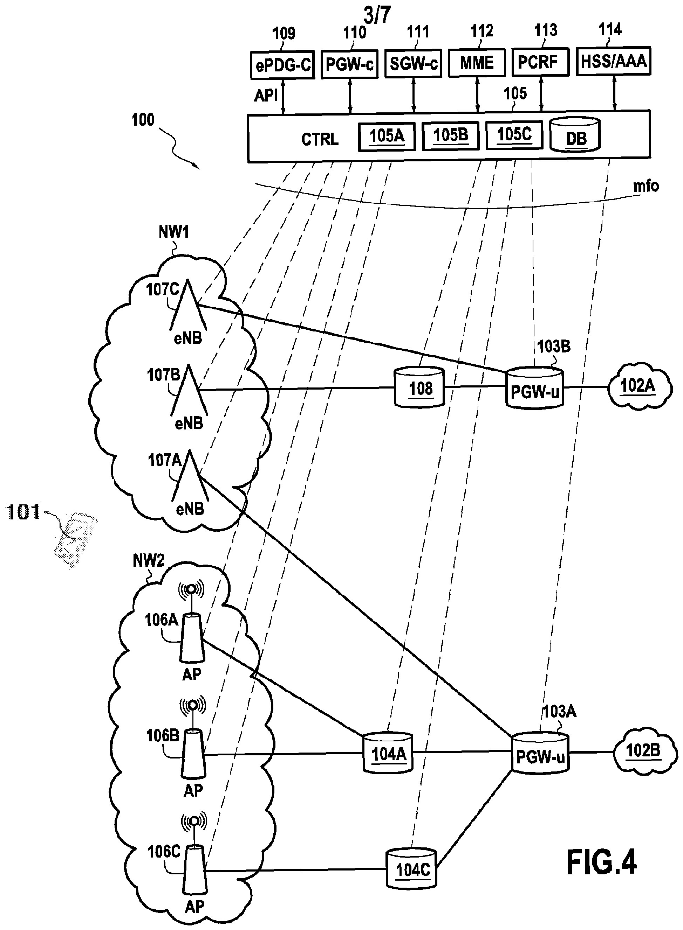

Nous allons maintenant décrire, en référence aux figures 4 à 9, comment l'invention propose avantageusement d'appliquer ce principe à une architecture de coeur de réseau IP, et plus particulièrement, dans le mode de réalisation décrit ici, à une architecture de coeur de réseau hybride permettant la convergence de réseaux mobiles et fixes.

Dans le mode de réalisation décrit ici, par souci de simplification de l'exposé, lorsqu'aucune précision n'est apportée dans la description, les fonctions et les modes de fonctionnement des équipements de l'architecture de coeur de réseau IP présentée (ex. passerelles d'interconnexion, stations de bases (eNodeB), points d'accès, équipement de gestion de mobilité MME, établissement des tunnels de communication selon le protocole GTP, PMIP ou IPsec, etc.) sont similaires ou identiques à ceux décrits dans les documents 3GPP TS 23.401 and 3GPP TS 23.402 édités par le consortium 3GPP et ne sont pas détaillés ici.

Cette hypothèse n'est toutefois pas limitative et l'invention peut également être appliquée à d'autres architectures de coeurs de réseau basés sur le protocole IP (« all IP networks »), tels que par exemple une architecture de coeur de réseau propriétaire. En outre, l'invention s'applique également dans le contexte d'un coeur de réseau IP auquel on accède via un unique réseau d'accès tel que par exemple un réseau d'accès WLAN.

La **figure 4** représente un coeur de réseau hybride 100 conforme à l'invention, dans un mode particulier de réalisation dans lequel le coeur de réseau 100 permet à un terminal UE 101 d'accéder à des services offerts par un (ou des) réseau(x) externe(s) de paquets de données PDN 102, via deux réseaux d'accès différents NW1 et NW2.

Dans l'exemple envisagé ici, le réseau d'accès NW1 est un réseau d'accès LTE ou E-UTRAN et le réseau d'accès NW2 est un réseau d'accès WLAN. Toutefois ces hypothèses ne sont pas limitatives et l'invention s'applique à d'autres réseaux d'accès utilisant un spectre radio licencié, comme par exemple un réseau d'accès 2G (ex. GSM, GPRS, etc.), 3G (UMTS), 4G ou encore 5G, ou non licencié (ex. WiFI). En outre, l'invention peut s'appliquer à un coeur de réseau supportant plus de deux réseaux d'accès.

Les réseaux PDN 102 sont reliés au coeur de réseau 100 par l'intermédiaire de passerelles d'interconnexion 103, aussi désignées par PGW-u (u faisant référence au plan utilisateur), permettant l'accès du coeur de réseau 100 aux réseaux PDN 102 et inversement. Ces passerelles d'interconnexion 103 disposent de fonctions de traduction d'adresses (ou NAT pour Network Address Translation) bien connues en soi, leur permettant de traduire des adresses IP (Internet Protocol) publiques utilisées sur les réseaux PDN 102 en adresses IP privées utilisées dans le coeur de réseau 100. Dans l'exemple illustré à la figure 4, on considère deux passerelles d'interconnexion 103A et 103B à deux réseaux PDN distincts respectivement 102A et 102B (par exemple le réseau 102A est le réseau public Internet et le réseau 102B est un centre de données).

Le coeur de réseau IP 100 comprend en outre une pluralité de commutateurs 104 et un dispositif de contrôle 105, conforme à l'invention, apte à commander ces commutateurs et les passerelles d'interconnexion 103.

Les commutateurs 104 sont reliés à un ou plusieurs points d'accès 106 du réseau d'accès NW2. Ainsi, dans l'exemple de la figure 4, le commutateur 104A est relié aux points d'accès 106A et 106B tandis que le commutateur 104C est relié au point d'accès 106C.

Ces commutateurs ont pour fonction de router les flux de données provenant de terminaux connectés aux points d'accès 106 vers les passerelles d'interconnexion 103 et inversement. Ces commutateurs sont aussi désignés par ePDG-u (u faisant référence au plan utilisateur), car ils implémentent des fonctions dans le plan utilisateur similaires ou identiques aux fonctions homologues réalisées par les passerelles ePDG décrites dans l'architecture EPC définie par le consortium 3GPP. En particulier, ils sont capables d'encapsuler et de désencapsuler des paquets de données conformément au protocole IPsec (premier protocole au sens de l'invention) pour les communications en voie descendante à destination des terminaux 101, et conformément au protocole GTP ou au protocole PMIP (second protocole au sens de l'invention) pour les communications en voie montante vers les passerelles d'interconnexion 103.

En d'autres mots, les commutateurs 104 sont capables d'établir des tunnels de communication aussi bien selon le protocole IPsec que selon les protocoles GTP ou PMIP.

De façon connue de l'homme du métier, l'établissement d'un tunnel de communication selon le protocole IPsec requiert l'échange entre les extrémités du tunnel de clés cryptographiques utilisées pour sécuriser les échanges sur ce tunnel.

De façon similaire, l'établissement d'un tunnel de communication GTP requiert la connaissance de différents paramètres de communication : chaque tunnel GTP est en effet identifié au niveau de chaque noeud du réseau entre lesquels il est établi par un identifiant de point d'extrémité du tunnel ou TEID (Tunnel Endpoint IDentifier), une adresse IP et un numéro de port UDP (User Datagram Protocol). C'est l'extrémité « réceptrice » du tunnel GTP qui attribue localement la valeur de l'identifiant TEID, utilisée par l'extrémité émettrice du tunnel pour transmettre des données ou de la signalisation dans ce tunnel à destination de l'extrémité réceptrice.

Enfin, pour le protocole PMIP, l'établissement d'un tunnel de communication s'appuie sur une clé d'encapsulation de routage générique ou GRE (pour Generic Routing Encapsulation).

Il convient de noter que l'invention s'applique également à d'autres protocoles, bien que ceux-ci ne soient pas envisagés actuellement par le standard 3GPP.

Les clés cryptographiques utilisées par le protocole IPsec, les identifiants de points d'extrémité (TEID) des tunnels de communication, les adresses IP et les ports de ces points d'extrémité utilisés par le protocole GTP, et les clés GRE du protocole PMIP sont des paramètres de communication au sens de l'invention. La correspondance entre les paramètres de communication nécessaires pour l'implémentation du protocole IPsec et les paramètres de communication nécessaires pour l'implémentation du protocole GTP ou du protocole PMIP pour une session d'un terminal est réalisée par chaque commutateur 104.

Dans le mode de réalisation décrit ici, les terminaux gérés par le coeur de réseau IP hybride 100 peuvent alternativement accéder aux services offerts par les réseaux PDN 102 via le réseau d'accès NW1, en se connectant à une station de base 107. Dans l'architecture considérée ici, les stations de base 107 du réseau d'accès NW1 (typiquement ici des stations de base eNodeB 107A, 107B et 107C) sont reliées directement aux passerelles d'interconnexion 103 ou par l'intermédiaire de commutateurs 108. Ces commutateurs 108 remplissent les mêmes fonctions que les routeurs OpenFlow introduits précédemment en référence aux figures 2 et 3, à savoir ils opèrent au niveau de la couche 2 du modèle OSI (Open Systems Interconnection) et routent, en fonction de leurs entêtes, les paquets de données IP qui transitent par eux entre les stations de base 107 et les passerelles d'interconnexion 103. Ces entêtes sont des entêtes GTP, les stations de base 107, les commutateurs 108 et les passerelles d'interconnexion 103 communiquant ici entre eux en utilisant le protocole GTP.

Conformément à l'invention, les plans utilisateur et de contrôle du coeur de réseau IP 100 sont séparés. Cette séparation est assurée par le dispositif de contrôle 105 qui reprend les fonctions du dispositif de contrôle OpenCTR décrites précédemment en relation avec les figures 2 et 3.

Le dispositif de contrôle 105, qui est un dispositif logiciel ici, interagit avec les fonctions de contrôle des commutateurs 104 et des passerelles d'interconnexion 103, par le biais d'API jouant le rôle des interfaces « NorthBound » décrites précédemment en référence à la figure 2. Ces fonctions de contrôle sont ici représentées par une entité 109 de contrôle des commutateurs 104 conforme à l'invention, aussi désignée par ePDG-c (c faisant référence au plan de contrôle), et une entité 110 de contrôle des passerelles d'interconnexion 103 aussi désignée par PGW-c.

Dans l'exemple illustré à la figure 4, le dispositif de contrôle 105 interagit également avec d'autres entités de contrôle dont :
- une entité 111 de contrôle des commutateurs 108, aussi désignée par SGW-c ;
- une entité 112 de gestion de la mobilité des terminaux dans le réseau NW1 (ou MME), responsable de l'authentification et l'autorisation des terminaux dans le réseau NW1, du paging des terminaux, des mises à jour des zones de tracking (ou « tracking area ») et de la gestion de la mobilité intra-3GPP ;
- une entité 113 de gestion des politiques de réseau ou PCRF (Policy and Charging Rules Function) ; et
- une entité 114 HSS/AAA de serveur d'abonnés et d'authentification.

Ces différentes entités de contrôle se présentent, dans le mode de réalisation décrit ici, sous la forme d'applications logicielles s'exécutant au-dessus du dispositif de contrôle logiciel 105. Les entités 112, 113 et 114 ont des fonctions similaires ou identiques à celles exercées par les entités éponymes définies dans l'architecture LTE/EPC du 3GPP. Toutefois, l'entité MME 112 n'est plus responsable ici de la sélection, pour une session de communication associée à un terminal, de la passerelle d'interconnexion et d'une passerelle de transfert de données impliquées lors de cette session dans l'échange de données entre le terminal et le réseau PDN. C'est l'entité de contrôle 111 qui sélectionne maintenant la passerelle d'interconnexion et le cas échéant, les commutateurs 108 par lesquels transite une session de communication entre une station de base 107 et la passerelle d'interconnexion 103. Cette sélection peut être opérée en fonction de différents critères de charge, de disponibilité, de localisation géographique du terminal, etc., connus de l'homme du métier et non décrits en détail ici.

Bien entendu, d'autres fonctions de contrôle peuvent être envisagées sous forme d'applications s'exécutant au-dessus du dispositif de contrôle logiciel 105 et interagissant avec lui via des API, comme par exemple une entité de contrôle DHCP, etc.

Dans le mode de réalisation décrit ici, les entités 113 et 114 peuvent interagir directement avec les entités de contrôle 109-112 selon par exemple les interfaces définies par le consortium 3GPP, tandis que les entités de contrôle 109-112 communiquent entre elles via le dispositif de contrôle 105.

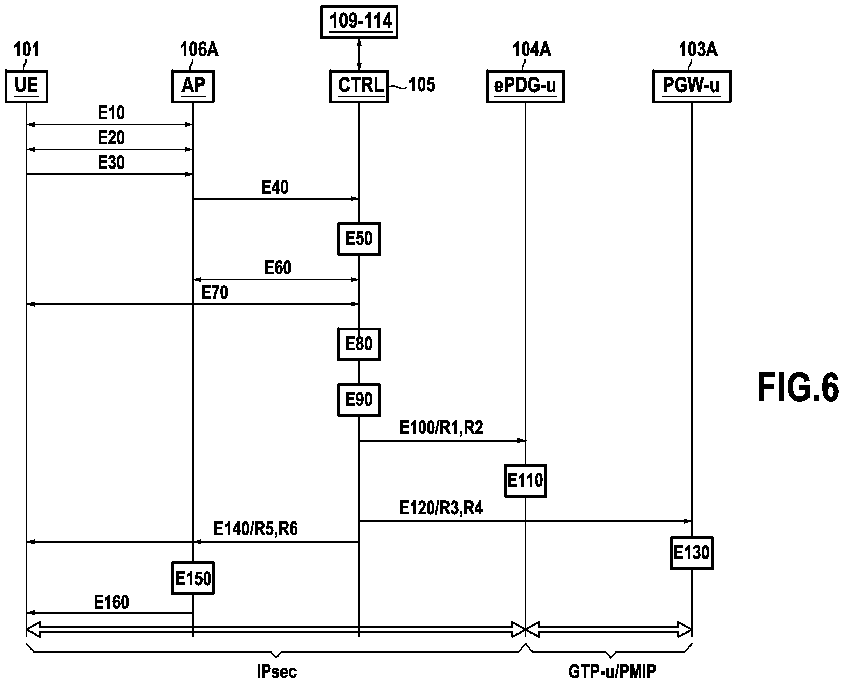

Le dispositif de contrôle logiciel 105 centralise donc l'intelligence réseau des passerelles d'interconnexion 103 et des commutateurs 104 (et le cas échéant 108), et détermine les règles de traitement devant être appliquées aux paquets de données reçus par ceux-ci. Ces règles de traitement sont similaires à celles décrites en référence à la figure 3, en ce qu'elles spécifient le traitement devant être appliqué par chaque équipement du réseau contrôlé par le dispositif de contrôle 105, sur réception d'un paquet d'un flux de données associé à une session de communication d'un terminal, et des paquets suivants associés au même flux. En particulier, elles comprennent différents paramètres de communication devant être utilisés lors de la transmission des paquets, comme par exemple les adresses (ex. adresses IP) des équipements vers lesquels router ces paquets, des identifiants d'extrémités de tunnels de communication lorsque le protocole GTP est utilisé pour la transmission des paquets, des clés cryptographiques lorsque les paquets sont transmis selon le protocole IPsec, etc. Ces paramètres de communication sont décrits plus en détail ultérieurement en référence aux figures 6 à 9 en fonction du contexte dans lequel ils sont utilisés (initiation d'une session de communication, transfert d'une session active d'un point d'accès à un autre ou d'un réseau d'accès à un autre, etc.). Ils sont stockés pour chaque terminal dans une base de données DB du dispositif de contrôle 105 avec d'autres informations relatives à ce terminal.

Pour élaborer les règles de traitement, le dispositif de contrôle 105 met en oeuvre une pluralité de protocoles de contrôle qui viennent en support des caractéristiques spécifiques des utilisateurs et des services, comme par exemple, des protocoles de gestion de la mobilité, de sécurité, d'application de politiques opérateurs, etc. A cet effet, il implémente une pluralité de fonctionnalités parmi lesquelles la gestion de la qualité de service (QoS pour Quality of Service), la répartition de la charge du réseau (ou « load balancing » en anglais), la gestion du routage, l'authentification, la fonction de pare-feu, etc. Le dispositif de contrôle logiciel 105 peut en outre prendre en compte d'autres aspects pour élaborer les règles de traitement s'appliquant sur les flux de données relatifs à un terminal, non décrits en détail ici, à savoir la localisation du terminal, le type de service concerné, les conditions du réseau à ce moment-là, la planification des paquets (ou packet scheduling en anglais), etc. Il assure ainsi l'établissement et le maintien des sessions de communication des terminaux des utilisateurs accédant au coeur de réseau 100 par l'intermédiaire des stations de base 107 du réseau d'accès NW1 ou des points d'accès 106 du réseau d'accès NW2, y compris en situation de mobilité des terminaux.

Comme mentionné précédemment, dans le mode de réalisation décrit ici, le dispositif de contrôle logiciel 105 est un dispositif logiciel, autrement dit une application ou encore un programme d'ordinateur s'exécutant sur un dispositif informatique ou ordinateur 115. La **figure 5** illustre schématiquement l'architecture matérielle d'un tel dispositif informatique 115. Il comprend un processeur 116, une mémoire morte 117, une mémoire vive 118, une mémoire non volatile 119 (dans laquelle est mémorisée la base de données DB du dispositif 105) et des moyens de communication 120.

Ces moyens de communication sont aptes en particulier à communiquer avec d'une part, les entités de contrôle 109-114 via des API comme mentionné précédemment, et d'autre part, avec les commutateurs 104 et 108, les passerelles d'interconnexion 103, les stations de base 107 et les points d'accès 106 en utilisant le protocole OpenFlow, ou plus spécifiquement, une extension de ce protocole, désignée ici par « interface *mfo* » de sorte à pouvoir transmettre les paramètres de communication précités permettant le routage des données dans le plan utilisateur défini par ces équipements. Cette interface de communication OpenFLow *mfo* joue le rôle d'interface « SouthBound » en référence à la figure 2 décrite précédemment.

La mémoire morte 117 du dispositif informatique 115 constitue un support d'enregistrement conforme à l'invention, lisible par le processeur 116 et sur lequel est enregistré un programme d'ordinateur conforme à l'invention comportant des instructions pour l'exécution des étapes d'un procédé de contrôle selon l'invention dont les étapes sont illustrées ultérieurement en référence aux figures 6 à 9 dans plusieurs exemples de mise en oeuvre.

Ce programme d'ordinateur définit de manière équivalente différents modules logiciels et fonctionnels du dispositif de contrôle 105, à savoir notamment :
- un module 105A de communication avec les entités de contrôle 109-114, apte à obtenir de ces entités des paramètres de communication destinés à être utilisés lors de sessions de communication relatives à des terminaux gérés par le coeur de réseau IP 100 ;
- un module 105B de contrôle du plan utilisateur, apte à élaborer à partir de ces paramètres de communication des règles de traitement des flux de données relatifs à ces terminaux et destinées à être appliquées par les équipements du plan utilisateur contrôlés par le dispositif de contrôle 105 ; et
- un module 105C de transmission de ces règles de traitement aux équipements du plan utilisateur concernés (parmi les stations de base 107, les commutateurs 104 et 108, les points d'accès 106 et les passerelles d'interconnexion 103 ici).

Les fonctions de ces modules seront décrites plus en détail ultérieurement en référence aux figures 6 à 9.

Il convient de noter que dans le mode de réalisation décrit ici, les entités de contrôle 109-114 sont également des entités logicielles exécutées par le dispositif informatique 115, de sorte que la mémoire morte 117 comprend également un support d'enregistrement sur lequel est enregistré un (ou plusieurs) programme(s) d'ordinateur définissant ces entités de contrôle. En particulier ce programme d'ordinateur définit pour l'entité de contrôle 109 selon l'invention des modules d'allocation d'identifiant de points d'extrémité de tunnels de communication et/ou de clés GRE, et un module de sélection tels que décrits ultérieurement en référence aux figures 6 à 9.

En variante, ces applications peuvent s'exécuter sur des dispositifs informatiques distincts communiquant entre eux de façon connue de l'homme du métier.

En d'autres termes, les programmes d'ordinateur précités définissent le dispositif de contrôle logiciel 105 et les entités logicielles 109-114 (ainsi que les modules fonctionnels mis en oeuvre par ces entités), de sorte que dans la description les références 105, 109-114 peuvent désigner aussi bien les entités fonctionnelles correspondantes que le dispositif informatique 115 associé permettant d'exécuter ces entités.

Dans le mode de réalisation décrit ici, les points d'accès 106 mettent en oeuvre les fonctions radio standards et connues de l'homme du métier permettant d'accéder au réseau NW2. Ces fonctions sont rappelées notamment dans le document 3GPP TS 23.402 intitulé « Technical Spécification Group Services and System aspects ; Architecture Enhancements for non-3GPP accesses », Release 11, septembre 2012.

Les points d'accès 106 sont reliés au dispositif de contrôle 105 par l'intermédiaire de l'interface *mfo* mentionnée précédemment et qui s'appuie sur le protocole OpenFlow. C'est par le biais de cette interface que le dispositif de contrôle 105 commande les points d'accès 106 à l'aide de règles de traitement des flux de données. Pour chaque requête initiale d'un terminal 101, chaque point d'accès 106 vérifie si le terminal est authentifié et s'il dispose de règles de traitement des flux de données relatifs à ce terminal (autrement dit d'une table de flux pour ce terminal). Si ce n'est pas le cas, le point d'accès 106 envoie une requête au dispositif de contrôle 105 pour déterminer quelle(s) action(s) il doit entreprendre en présence de flux relatifs à ce terminal. En variante, il peut réaliser une action définie par défaut.

De façon similaire, les stations de base 107 du réseau d'accès NW2 implémentent les mêmes fonctions radio que celles définies pour les stations eNodeB dans le standard 3GPP, par exemple dans le document 3GPP TS 23.401 intitulé « Technical Spécification Group Services and System aspects ; General Packet Radio Service (GPRS) enhancements for Evolved Universal Terrestrial Radio Access Network (E-UTRAN) Access », Release 12, mars 2013.

Ces stations de base 107 communiquent avec les commutateurs 108 par le biais de l'interface S1-U définie par le standard, ou avec les passerelles d'interconnexion 103 directement, en fonction des règles de traitement communiquées par le dispositif de contrôle 105. L'interface S1-U ou l'interface directe entre les stations de base 107 et les passerelles d'interconnexion 103 s'appuie, comme mentionné précédemment, sur le protocole GTP.

Lorsqu'un terminal émet une requête d'attachement initiale à une station de base 107, celle-ci crée un identifiant unique pour ce terminal sur le protocole OpenFlow et le transmet au dispositif de contrôle 105 via l'interface *mfo.* Le dispositif de contrôle 105 utilise le même identifiant pour envoyer des informations à la station de base concernant ce terminal, ce qui permet à la station de base de reconnaître facilement le terminal auquel s'appliquent ces informations.

Les passerelles d'interconnexion 103 agissent comme des commutateurs OpenFlow élaborés capables d'encapsuler et de désencapsuler des paquets de données relatifs aux terminaux en utilisant le protocole GTP ou le protocole PMIP. Leurs actions en termes de routage des paquets sont commandées par les règles de traitement élaborées par le dispositif de contrôle 105 à partir de ses interactions notamment avec l'entité de contrôle 110 des passerelles d'interconnexion.

En particulier, lorsque le protocole GTP est utilisé par les passerelles d'interconnexion 103 pour communiquer avec les commutateurs 104 et 108 et avec les stations de base 107, l'entité de contrôle 110 alloue :
- une unique valeur d'identifiant de point d'extrémité de tunnel de communication (TEID) pour chaque session de communication associée à un terminal et pour les transmissions montantes entre une station de base 107 du réseau NW1 à laquelle est connectée le terminal et une passerelle d'interconnexion 103 ou entre un commutateur 108 auquel est reliée la station de base 107 et la passerelle d'interconnexion 103 ; ou
- une unique valeur d'identifiant de point d'extrémité de tunnel de communication (TEID) pour chaque session de communication associée à un terminal et pour les transmissions montantes entre un commutateur 104 relié à un point d'accès 106 du réseau NW2 auquel est connecté le terminal et une passerelle d'interconnexion 103.

Par unique, on entend que cette valeur est invariante tout au long de la session de communication du terminal, dès lors que la passerelle d'interconnexion 103, qui constitue l'une des extrémités du tunnel de communication, ne change pas.

L'entité de contrôle 110 est en outre responsable de l'allocation des adresses IP d'attachement des terminaux via un serveur DHCP et décide des canaux de support de qualité de service (« bearers » en anglais) attribués aux terminaux en fonction des politiques opérateurs et de la qualité de service attribuée aux terminaux. Les informations concernant les politiques opérateurs et les qualités de service attribuées aux terminaux sont transmises à l'entité de contrôle 110 par l'entité de contrôle PCRF 113 via le dispositif de contrôle 105.

L'entité de contrôle ePDG-c 109 des commutateurs 104 et 108 est en charge de l'authentification et de l'autorisation des terminaux se connectant au coeur de réseau IP 100 par l'intermédiaire du réseau d'accès NW2. Elle alloue également les paramètres de communication nécessaires pour l'établissement des tunnels de communication IPsec entre les terminaux 101 et les commutateurs 104 et pour l'établissement de tunnels de communication GTP ou PMIP entre les commutateurs 104 et les passerelles d'interconnexion 103 (interface S2b).

L'entité de contrôle ePDG-c 109 est avantageusement configurée pour allouer, via ses modules d'allocation, les mêmes clés cryptographiques IPsec, autrement dit un tunnel de communication IPsec unique, à un terminal dès lors que celui-ci change de points d'accès au réseau NW2 mais pas de commutateur. Autrement dit, les clés cryptographiques utilisées sur le tunnel IPsec entre un terminal et un commutateur restent invariantes lors de la session de communication, même si le terminal change de points d'accès.

De même pour le protocole GTP, l'entité de contrôle ePDG-c 109 alloue, via ses modules d'allocation, un identifiant de point d'extrémité de tunnel de communication unique à une session de communication d'un terminal pour des transmissions descendantes entre une passerelle d'interconnexion PGW-u 103 et un commutateur 104. Grâce à l'invention, le tunnel de communication alloué à une session de communication active ne change pas (i.e. identifiants TEID invariants). Ainsi, quand un terminal change de point d'accès, mais pas de commutateur, le même tunnel de communication est utilisé pour la session de communication de ce terminal sur l'interface S2b entre le commutateur et la passerelle d'interconnexion reliée à ce commutateur.

Il en est de même pour le protocole PMIP (une clé GRE allouée de manière unique pour une même session impliquant le terminal).

Ainsi, l'invention propose une adaptation de l'architecture de coeur de réseau IP définie par le standard 3GPP dans le document TS23.401 en introduisant un nouveau plan de contrôle orchestré par le dispositif de contrôle 105 et les entités de contrôles 109-114, qui offre une plus grande flexibilité et une gestion facilité de la mobilité des terminaux, comme cela est illustré plus précisément en référence aux figures 6 à 9. Selon l'invention, les interfaces de communication S1-MME (entre l'entité de gestion de la mobilité MME et les stations de base), S11 (entre l'entité MME et les passerelles de transfert de données SGW) et S5-C (entre les passerelles de transfert de données SGW et les passerelles d'interconnexion PGW) définies par le standard 3GPP sont modifiées et remplacées par l'interface *mfo* utilisée par le dispositif de contrôle 105 pour commander les stations de base 107, les points d'accès 106, les commutateurs 104 et 108 et les passerelles d'interconnexion 103. En outre l'invention propose un nouveau plan de contrôle pour les passerelles ePDG et les passerelles PGW, séparé des fonctions de transfert de données mises en oeuvre par ces passerelles.

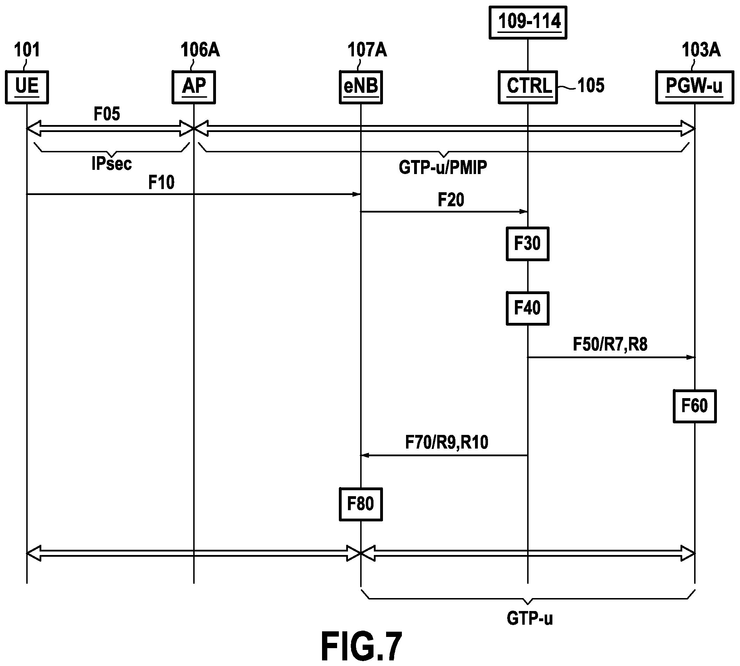

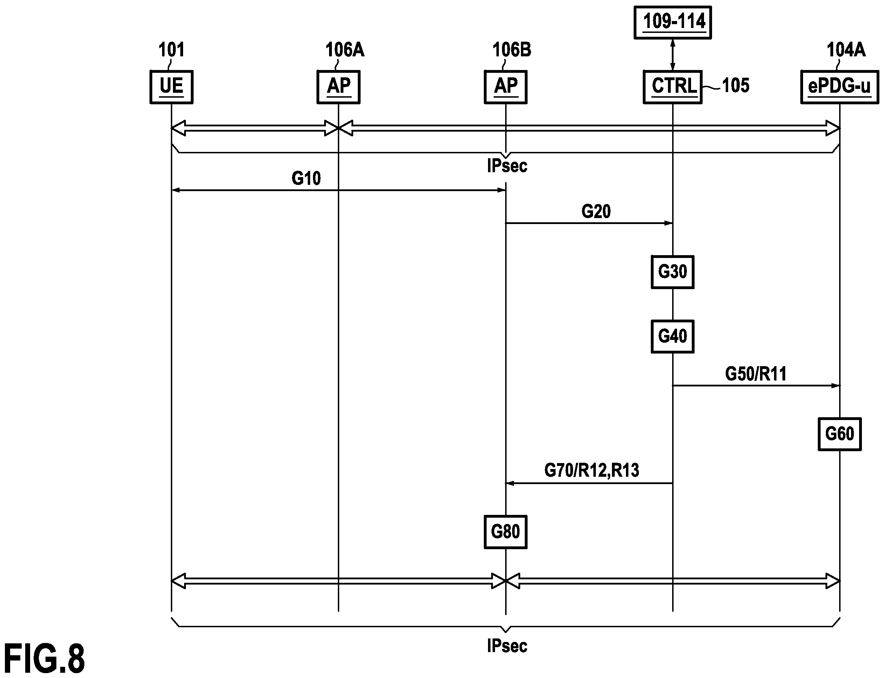

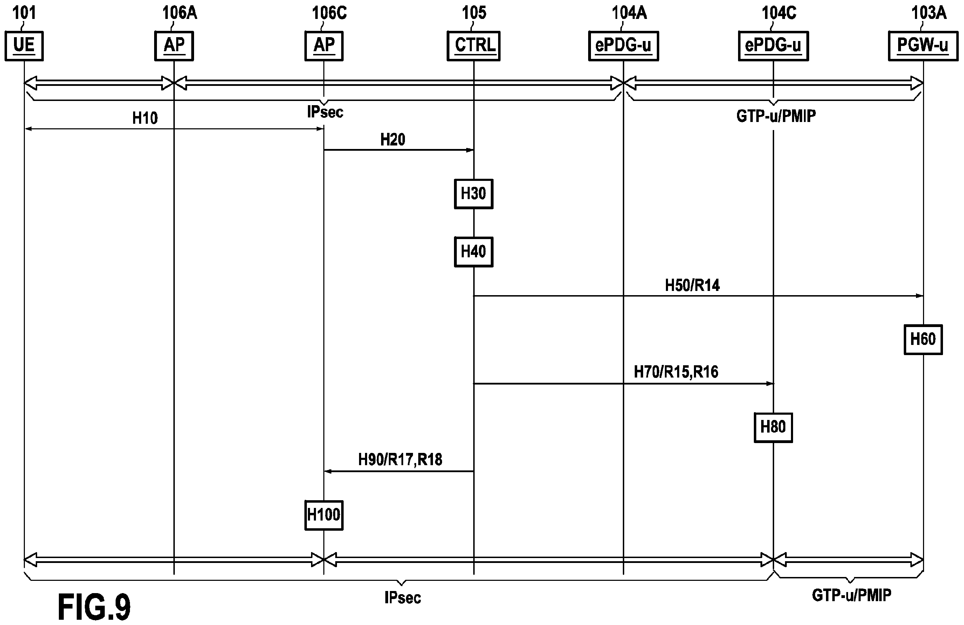

Nous allons maintenant illustrer plus en détails la gestion opérée par le coeur de réseau 100 d'une session de communication du terminal utilisateur UE 101 grâce à cette nouvelle architecture. Plus particulièrement, quatre procédures sont décrites en référence respectivement aux figures 6 à 9, à savoir :
- une procédure d'attachement du terminal 101 au coeur de réseau 100 en se connectant via un point d'accès du réseau d'accès NW2 (figure 6) ;
- une procédure de transfert d'une session de communication active du terminal 101 d'un point d'accès du réseau d'accès NW2 vers une station de base du réseau d'accès NW1 (figure 7) ;
- une procédure de transfert d'une session de communication active du terminal 101 d'un point d'accès initial du réseau d'accès NW2 vers un point d'accès cible, les points d'accès initial et cible étant reliés au même commutateur 104 (figure 8) ; et
- une procédure de transfert d'une session de communication active du terminal 101 d'un point d'accès initial du réseau d'accès NW2 vers un point d'accès cible, les points d'accès initial et cible étant reliés à des commutateurs distincts, reliés à une même passerelle d'interconnexion (figure 9).

Ces quatre procédures reprennent les principales étapes du procédé de contrôle selon l'invention. Elles ne sont que des exemples illustratifs du contrôle réalisé par le dispositif de contrôle 105 et d'autres procédures pourraient être imaginées profitant des avantages de l'architecture SDN proposée par l'invention.

La procédure d'attachement illustrée à la **figure 6** permet au terminal 101 de s'enregistrer auprès du coeur de réseau 100, par exemple suite à la mise sous tension du terminal 101. Dans l'exemple envisagé à la figure 6, le terminal UE 101 est connecté à un point d'accès 106A du réseau NW2 pour s'enregistrer auprès du coeur de réseau 100. Le point d'accès 106A est relié au commutateur 104A.

Sur réception d'une requête initiale émise par le terminal 101 (étape E10), le point d'accès 106A vérifie la présence de l'identité du terminal 101 dans une base de données regroupant les identités des terminaux déjà authentifiés et autorisés auprès de lui.

Si cette identité n'est pas présente dans la base (comme c'est le cas ici, s'agissant d'une procédure d'attachement du terminal), le point d'accès 106A envoie une requête d'authentification au terminal 101, conformément ici au protocole EAP (Extensible Authentication Protocol) (étape E20).

Le terminal 101 répond à cette requête en envoyant au point d'accès 106A un message EAP (étape E30). Ce message est routé par le point d'accès 106 vers le dispositif de contrôle 105 dans un message OpenFlow de type PACKET_IN (étape E40).

Sur réception de ce message, le dispositif de contrôle 105 le transfère à l'entité HSS/AAA 114 par l'intermédiaire de son module de communication 105A (étape E50).

L'entité HSS/AAA 114 initie des échanges avec le point d'accès 106A et le terminal 101 en vue de son authentification, via le dispositif de contrôle 105 (étape E60). Ces échanges reprennent les échanges classiquement mis en oeuvre lors de l'authentification d'un terminal par une entité HSS/AAA et décrits dans le document 3GPP TS 33.402 intitulé « Technical Spécification Group Services and System Aspects ; 3GPP System Architecture Evolution (SAE) ; Security aspects of non-3GPP accesses », Release 12, mars 2012 (cf. figure 6.2-1 notamment), à l'exception qu'ils transitent maintenant par le dispositif de contrôle 105.

Suite à l'authentification du terminal 101, celui-ci initie une procédure d'établissement d'un tunnel de communication IPsec pour communiquer avec le commutateur 104A via le point d'accès 106A (étape E70).

Dans l'exemple envisagé ici, cette procédure s'appuie sur le protocole IKE (Internet Key Exchange) v2. De façon connue, avant qu'une transmission IPsec puisse être possible, le protocole IKE (ou sa version 2 ici) est utilisé pour authentifier les deux extrémités du tunnel de communication IPsec sécurisé via un échange de clés cryptographiques partagées entre les deux extrémités du tunnel. Les deux extrémités du tunnel sont ici le terminal 101 et le commutateur 104A.

Cette procédure est mise en place entre le terminal 101 et l'entité de contrôle ePDG-c 109 du commutateur 104A, via le point d'accès 106A et le dispositif de contrôle 105. Autrement dit, le terminal 101 adresse ses messages échangés avec l'entité de contrôle ePDG-c pour son authentification selon le protocole IKEv2 au point d'accès 106A, qui les transfère sous la forme de messages OpenFlow au dispositif de contrôle 105, ce dernier les routant à son tour vers l'entité de contrôle ePDG-c 109 via son module de communication 105A. Ces messages comprennent notamment un message d'initiation IKE_SA INIT et une requête d'authentification IKE_AUTH Request comprenant l'identité du terminal 101 et l'identifiant APN (pour Access Point Name) du réseau externe 102 auquel il souhaite accéder.

L'entité de contrôle ePDG-c 109 obtient les informations d'authentification du terminal 101 auprès du serveur HSS/AAA 114 via le dispositif de contrôle 105 et initie via ce dernier une procédure d'authentification avec le terminal 101 conformément au protocole IKEv2.

Suite à l'authentification du terminal 101, l'entité de contrôle ePDG-c 109 fournit au dispositif de contrôle 105 les paramètres IKEv2 permettant l'établissement d'un tunnel de communication IPsec entre le terminal 101 et le commutateur 104A. Ces paramètres comprennent notamment les clés cryptographiques destinées à être partagées et utilisées entre ces équipements.

Elle alloue également à la session active du terminal 101, pour un tunnel de communication entre une passerelle d'interconnexion 103 et le commutateur 104A et pour les transmissions descendantes :
- un identifiant de point d'extrémité (TEID) de ce tunnel de communication, si le protocole GTP (ou plus précisément GTP-u) est utilisé sur l'interface S2b entre ces deux équipements ; ou
- une clé d'encapsulation générique de routage ou clé GRE pour ce tunnel si le protocole PMIP est utilisé.

L'entité de contrôle ePDG-c 109 déclenche en outre, via le dispositif de contrôle 105, l'attribution de paramètres de communication par l'entité de contrôle PGW-c 110, ces paramètres étant destinés à être utilisés pour l'établissement du tunnel de communication entre la passerelle d'interconnexion PGW-u 103 permettant d'accéder au réseau externe PDN 102 identifié par le terminal 101 dans sa requête IKE_AUTH Request, et le commutateur 104A relié au point d'accès 106A (interface S2b) (étape E80).

L'entité de contrôle PGW-c 110 sélectionne une passerelle d'interconnexion PGW-u 103A utilisée pour la session du terminal (selon des critères classiques pour l'homme du métier, comme par exemple la charge et/ou la disponibilité des passerelles, le réseau PDN auquel elles sont connectées, la localisation du terminal, etc.). Elle alloue ensuite au tunnel de communication entre cette passerelle d'interconnexion 103A et le commutateur 104A pour les transmissions montantes, selon le protocole de communication mis en oeuvre sur l'interface S2b :
- un identifiant TEID de point d'extrémité du tunnel de communication si le protocole GTP est utilisé ; ou
- une clé d'encapsulation générique de routage ou clé GRE pour ce tunnel si le protocole PMIP est utilisé.

L'entité de contrôle PGW-c 110 transmet au dispositif de contrôle 105, l'adresse IP de la passerelle d'interconnexion PGW-u 103A sélectionnée et l'identifiant TEID ou la clé GRE alloué(e). Ces paramètres constituent des paramètres de communication au sens de l'invention.

Sur réception de ces paramètres de communication, le dispositif de contrôle 105 les stocke dans sa base de données DB et élabore, via son module de contrôle 105B, des règles de traitement destinées à commander la passerelle d'interconnexion 103A et le commutateur 104A auquel le point d'accès 106A est relié (étape E90). Ces règles de traitement indiquent les traitements que ces équipements doivent mettre en oeuvre en présence d'un paquet de données relatif au terminal 101.

Plus précisément ici, il s'agit de règles de transfert (routage ou transmission) de données qui indiquent à chacun de ces équipements vers quel équipement il doit router ce paquet, autrement dit qui commande chacun de ces équipements de sorte qu'il route le paquet de données reçu vers l'équipement spécifié dans la règle de traitement.

Ainsi, dans l'exemple envisagé ici, le dispositif de contrôle 105 élabore les règles de traitement suivantes destinées à être appliquées par le commutateur 104A :
- une règle R1 de traitement de flux de données provenant du terminal 101 (c'est-à-dire pour la liaison montante), comprenant :
   ∘ l'adresse IP de la passerelle d'interconnexion 103A ; et
   ∘ l'identifiant TEID du point d'extrémité ou la clé d'encapsulation de routage générique du tunnel de communication entre le commutateur 104A et la passerelle 103A, alloué(e) par l'entité de contrôle PGW-c 110 ;
- une règle R2 de traitement de flux de données destinés au terminal 101 (c'est-à-dire pour la liaison descendante) et comprenant :
   ∘ l'adresse IP du point d'accès 106A ; et
   ∘ les clés cryptographiques destinées à être utilisées dans le tunnel de communication IPsec entre le commutateur 104A et le terminal 101, et extraites des paramètres IKEv2 obtenus par le dispositif de contrôle 105.

Par ailleurs, le dispositif de contrôle 105 élabore les règles de traitement suivantes destinées à être appliquées par la passerelle d'interconnexion 103A :
- une règle R3 de traitement de flux de données provenant du terminal 101 (c'est-à-dire pour la liaison montante) comprenant l'identifiant APN (Access Point Name) du réseau externe 102 de paquets de données auquel le terminal 101 souhaite accéder ; et
- une règle R4 de traitement de flux de données destinés au terminal (c'est-à-dire pour la liaison descendante) et comprenant :
   ∘ l'adresse IP du commutateur 104A ; et
   ∘ l'identifiant TEID du point d'extrémité ou la clé d'encapsulation de routage générique du tunnel de communication entre la passerelle d'interconnexion 103A et le commutateur 104A alloué(e) par l'entité de contrôle ePDG-c 109.

Le dispositif de contrôle 105 élabore également les règles de traitement suivantes destinées à être appliquées par le point d'accès 106A :
- une règle de traitement R5 destinée à être appliquée au niveau IP par le point d'accès 106A aux flux de données provenant du terminal 101 (c'est-à-dire pour la liaison montante), cette règle de traitement comprenant l'adresse IP du commutateur 104A ; et
- une règle de traitement R6 destinée à être appliquée au niveau IP par le point d'accès 106A aux flux de données destinés au terminal 101 (c'est-à-dire pour la liaison descendante), cette règle de traitement comprenant l'adresse IP du terminal 101.

Le dispositif de contrôle 105 utilise les règles de traitements R1 et R2 pour commander le commutateur 104A relié au point d'accès 106A. Plus précisément il transmet au commutateur 104A ces règles de traitement R1 et R2 par le biais de son module de transmission 105C, dans un message OpenFlow PACKET_OUT (étape E100).

Le commutateur 104A crée deux nouvelles entrées dans une table de flux associée au terminal 101 comprenant les paramètres de communication transmis dans les règles de traitement R1 et R2 respectivement (étape E110). Cette table de flux est similaire ou identique aux tables FTAB décrites précédemment en référence à la figure 3.

Ces entrées commandent le comportement du commutateur 104A en présence d'un flux de données relatif au terminal 101 en liaison montante et en liaison descendante. Autrement dit, sur réception d'un flux de données reçu en provenance du terminal 101, le commutateur 104A route ce flux de données vers la passerelle d'interconnexion 103A dont l'adresse IP lui a été fournie par la règle R1 et dans un tunnel de communication avec la passerelle d'interconnexion 103A identifié par le TEID fourni dans la règle R1.

De façon similaire, sur réception d'un flux de données destiné au terminal 101, le commutateur 104A route ce flux de données vers le point d'accès 106A dont l'adresse IP lui a été fournie par la règle R2 et dans un tunnel de communication IPsec établi avec le terminal 101 au moyen des clés cryptographiques fournies dans la règle R2.

De même, le dispositif de contrôle 105 utilise les règles de traitements R3 et R4 pour commander la passerelle d'interconnexion 103A. Plus précisément il transmet à la passerelle d'interconnexion 103A ces règles de traitement R3 et R4 par le biais de son module de transmission 105C, dans un message OpenFlow PACKET_OUT (étape E120).

La passerelle d'interconnexion 103A crée deux nouvelles entrées dans une table de flux associée au terminal 101 comprenant les paramètres de communication transmis dans les règles de traitement R3 et R4 respectivement (étape E140). Cette table de flux est similaire ou identique aux tables FTAB décrites précédemment en référence à la figure 3.

Ces entrées commandent le comportement de la passerelle d'interconnexion 103A en présence d'un flux de données relatifs au terminal 101 en liaison montante et en liaison descendante. Autrement dit, sur réception d'un flux de données reçu en provenance du terminal 101, la passerelle d'interconnexion 103A route ce flux de données vers le réseau externe PDN 102 dont l'identifiant APN lui a été fourni par la règle R3.

De façon similaire, sur réception d'un flux de données destiné au terminal 101, la passerelle d'interconnexion 103A route ce flux de données vers le commutateur 104A dont l'adresse IP lui a été fournie par la règle R4 et dans un tunnel de communication avec le commutateur 104A identifié par le TEID fourni dans la règle R4.

Enfin, le dispositif de contrôle 105 utilise les règles de traitements R5 et R6 pour commander le point d'accès 106A. Plus précisément il transmet au point d'accès 106A ces règles de traitement R5 et R6 par le biais de son module de transmission 105C, dans un message OpenFlow PACKET_OUT (étape E140).

Le point d'accès 106A crée deux nouvelles entrées dans une table de flux associée au terminal 101 comprenant les paramètres de communication transmis dans les règles de traitement R5 et R6 respectivement (étape E150). Cette table de flux est similaire ou identique aux tables FTAB décrites précédemment en référence à la figure 3.

Ces entrées commandent le comportement du point d'accès 106A en présence d'un flux de données relatifs au terminal 101 en liaison montante et en liaison descendante. Autrement dit, sur réception d'un flux de données reçu en provenance du terminal 101, le point d'accès 106A route ce flux de données vers le commutateur 104A dont l'adresse IP lui a été fournie dans la règle R5.

De façon similaire, sur réception d'un flux de données destiné au terminal 101, le point d'accès 106A route ce flux de données vers le terminal 101 dont l'adresse IP lui a été fournie par la règle R6.

Il convient de noter que les traitements mis en oeuvre par le point d'accès 106A sur les flux de données destinés au ou émis par le terminal 101 sont des traitements au niveau IP. Le point d'accès 106A ne dispose donc pas des clés cryptographiques échangées entre le terminal 101 et le commutateur 104A pour l'établissement du tunnel de communication IPsec.

Suite à la mise à jour des tables de flux de la passerelle d'interconnexion 103A et du commutateur 104A, le dispositif de contrôle 105 envoie un message de réponse IKE-AUTH à la requête d'authentification du terminal 101 comprenant les paramètres IKEv2 (incluant notamment les clés cryptographiques destinées à être utilisées avec le commutateur 104A), ainsi que d'autres paramètres de configuration classiquement échangés comme les adresses IP à utiliser pour les transmissions en liaison montante (étape E160). Ce message transite par le point d'accès 106A.

Ce message de réponse clôture l'établissement du plan utilisateur entre le terminal 101 et le réseau PDN 102 (étape E150). Selon ce plan utilisateur, un tunnel de communication IPsec est utilisé entre le terminal 101 et le commutateur 104A et un tunnel de communication GTP-u ou PMIP est utilisé entre le commutateur 104A et la passerelle d'interconnexion 103A. Grâce aux commandes du dispositif de contrôle 105 transmises à la passerelle d'interconnexion 103A et au commutateur 104A, les paquets de données relatifs au terminal 101 sont routés directement jusqu'à leur destination.

Il convient de noter, que pour une gestion efficace des ressources du coeur de réseau IP, le point d'accès 106A peut avantageusement supprimer sa table de flux associée au terminal 101. Ceci peut être réalisé suite à une commande en ce sens du dispositif de contrôle 105 en utilisant un message OpenFLow ou à l'issue d'une temporisation associée à la table de flux. Si cette table de flux n'est plus utilisée pour le terminal 101 durant une période supérieure à la temporisation, elle est supprimée automatiquement par le point d'accès 106A.

Nous allons maintenant décrire, en référence aux figures 7 à 9, des procédures de transfert (ou handover en anglais) d'une session de communication active du terminal 101.

La procédure de transfert illustrée à la **figure 7** permet de transférer une session active du terminal 101 d'un point d'accès du réseau NW2 vers une station de base du réseau NW1, le point d'accès et la station de base dépendant d'une même passerelle d'interconnexion.

Dans l'architecture EPC telle que prévue par le standard 3GPP, lorsqu'un terminal connecté à un point d'accès d'un réseau d'accès non-3GPP (tel qu'un réseau WLAN) se connecte à une station de base d'un réseau d'accès 3GPP tel qu'un réseau LTE ou E-UTRAN, toutes les sessions de communication actives de ce terminal sont interrompues et le terminal doit ré-établir ces sessions. Ceci a pour conséquence de générer beaucoup de signalisation dans le coeur de réseau IP. L'architecture proposée par l'invention permet de pallier cet inconvénient en transférant les sessions de communication actives de manière transparente entre un point d'accès du réseau NW2 vers une station de base du réseau d'accès NW1.

En référence à la figure 7, on suppose que le terminal 101 est connecté à un point d'accès 106A du réseau NW2 (étape F05) et se déplace vers une station de base 107A du réseau d'accès NW1. Le point d'accès 106A est relié au commutateur 104A, lui-même relié à la passerelle d'interconnexion 103A. Un tunnel IPsec est établi entre le terminal 101 et le commutateur 104A et un tunnel de communication GTP-u ou PMIP est établi entre le commutateur 104A et la passerelle d'interconnexion 103A.

Le terminal 101 déclenche donc une procédure de préparation du handover avec la station de base 107A. Une telle procédure est connue en soi et n'est pas décrite davantage ici. Elle se déroule par exemple de façon identique à la procédure de préparation de handover décrite dans le document TS 23.401.

A l'issue de cette procédure, le terminal 101 envoie un premier paquet à la station de base 107A (étape F10). La station de base ne disposant pas de table de flux associée au terminal 101, ce paquet est transféré par la station de base 107A vers le dispositif de contrôle 105 dans un message OpenFlow PACKET_IN (étape F20).

Le dispositif de contrôle 105 désencapsule le message, vérifie les informations du terminal 101 dans sa base de données DB, et envoie un message de localisation du terminal 101 à l'entité de gestion de la mobilité MME 112 (étape F30). L'entité de gestion de la mobilité MME 112 met à jour la localisation du terminal 101 dans sa base de données et au niveau du serveur HSS/AAA 114, puis envoie une réponse au dispositif de contrôle 105.

Sur réception de cette réponse, le dispositif de contrôle 105 élabore, via son module de contrôle 105B, les règles de traitement suivantes destinées à être appliquées par la passerelle d'interconnexion 103A :
- une règle R7 de traitement de flux de données provenant du terminal 101 (c'est-à-dire pour la liaison montante) comprenant l'identifiant APN du réseau externe 102 de paquets de données auquel le terminal 101 accède via sa session de communication ; et
- une règle R8 de traitement de flux de données destinés au terminal (c'est-à-dire pour la liaison descendante) comprenant :
   ∘ l'adresse IP de la station de base 107A ; et
   ∘ un identifiant de point d'extrémité d'un tunnel de communication (TEID) entre la passerelle d'interconnexion 103A et la station de base 107A. Cet identifiant est alloué par la station de base 107A par exemple sur requête du dispositif de contrôle 105.

Par ailleurs, le dispositif de contrôle 105 élabore, via son module de contrôle 105B, les règles de traitement suivantes destinées à être appliquées par la station de base 107A :
- une règle R9 de traitement de flux de données provenant du terminal 101 (i.e. pour la liaison montante)comprenant :
   ∘ l'adresse IP de la passerelle d'interconnexion 103A ; et
   ∘ un identifiant de point d'extrémité du tunnel de communication (TEID) entre la station de base 107 et la passerelle d'interconnexion 103, alloué par l'entité de contrôle PGW-c 110 de la passerelle d'interconnexion 103A. Cet identifiant de point d'extrémité est identique à celui utilisé pour identifier le tunnel de communication GTP-u ou PMIP entre la passerelle d'interconnexion 103A et le commutateur 104A dès lors que la même passerelle d'interconnexion 103A est reliée au commutateur 104A et à la station de base 107A ; et
- une règle R10 de traitement de flux de données destinés au terminal (c'est-à-dire pour la liaison descendante) comprenant l'adresse IP du terminal 101.

Le dispositif de contrôle 105 utilise les règles de traitement R7 et R8 pour commander la passerelle d'interconnexion 103A. Plus précisément il transmet à la passerelle d'interconnexion 103A les règles de traitement R7 et R8 par le biais de son module de transmission 105C, dans un message OpenFlow PACKET_MOD (étape F50).

Sur réception de ce message, la passerelle d'interconnexion 103A met à jour les entrées de sa table de flux associée au terminal 101 (précédemment remplies avec l'adresse IP du commutateur 104A relié au point d'accès 106A) avec les paramètres de communication transmis dans les règles de traitement R7 et R8 respectivement (étape F60). Cette table de flux est similaire ou identique aux tables FTAB décrites précédemment en référence à la figure 3.

Ces entrées commandent le comportement de la passerelle d'interconnexion 103A en présence d'un flux de données relatif au terminal 101 en liaison montante et en liaison descendante. Autrement dit, sur réception d'un flux de données reçu en provenance du terminal 101, la passerelle d'interconnexion 103A route ce flux de données vers le réseau PDN 102 dont l'identifiant APN lui a été fourni dans la règle R7.

De façon similaire, sur réception d'un flux de données destiné au terminal 101, la passerelle d'interconnexion 103A route ce flux de données vers la station de base 107A dont l'adresse IP lui a été fournie par la règle R8 et dans un tunnel de communication avec la station de base 107A identifié par le TEID fourni dans la règle R8.

De même, le dispositif de contrôle 105 utilise les règles de traitement R9 et R10 pour commander la station de base 107A. Plus précisément il transmet à la station de base 107A ces règles de traitement par le biais de son module de transmission 105C, dans un message OpenFlow PACKET_OUT (étape F70).

La station de base 107A crée deux nouvelles entrées dans une table de flux associée au terminal 101 comprenant les paramètres de communication transmis dans les règles de traitement R9 et R10 respectivement (étape F80). Cette table de flux est similaire ou identique aux tables FTAB décrites précédemment en référence à la figure 3.

Ces entrées commandent le comportement de la station de base 107A en présence d'un flux de données relatifs au terminal 101 en liaison montante et en liaison descendante. Autrement dit, sur réception d'un flux de données reçu en provenance du terminal 101, la station de base 107A route ce flux de données vers la passerelle d'interconnexion 103A dont l'adresse IP lui a été communiquée dans la règle de traitement R9 et dans un tunnel de communication avec cette passerelle identifié par le TEID contenu dans la règle R9.

De façon similaire, sur réception d'un flux de données destiné au terminal 101, la station de base 107A route ce flux de données vers le terminal 101 dont l'adresse IP lui a été fournie par la règle R10.

En variante, la station de base 107A utilise l'adresse IP fournie par le terminal 101 lors de la préparation du handover pour remplir la table de flux pour la liaison descendante.

Suite à la création de ces entrées, un tunnel de communication GTP-u identifié par les TEID fournis dans les règles R8 et R9 est établi entre la station de base 107A et la passerelle d'interconnexion 103A. Tous les paquets de données relatifs à la session de communication du terminal 101 sont maintenant routés dans ce tunnel GTP-u. La session active du terminal établie via le point d'accès non-3GPP 106A est ainsi transférée sans interruption vers la station de base 107A et sans perte de paquets (ou une perte négligeable).

La procédure de transfert illustrée à la **figure 8** permet de transférer une session active du terminal 101 d'un point d'accès du réseau NW2 vers un autre point d'accès du réseau NW2 relié au même commutateur.

Comme mentionné précédemment pour les transferts de sessions d'un point d'accès du réseau non-3GPP NW2 vers une station de base du réseau 3GPP NW1, lorsqu'un terminal connecté à un point d'accès d'un réseau d'accès non-3GPP (tel qu'un réseau WLAN) se connecte à un autre point d'accès de ce même réseau d'accès non-3GPP, toutes les sessions de communication actives de ce terminal sont interrompues et le terminal doit ré-établir ces sessions. L'architecture proposée par l'invention permet de pallier cet inconvénient en transférant les sessions de communication actives de manière transparente entre un point d'accès du réseau NW2 vers un autre point d'accès de ce même réseau, qu'ils soient reliés ou non au même commutateur.

Ainsi, en référence à la figure 8, on suppose que le terminal 101 est connecté à un point d'accès 106A du réseau NW2 via lequel il accède au réseau externe PDN 102. Un tunnel de communication IPsec est établi entre le terminal 101 et le commutateur 104A au travers de ce point d'accès 106A ; ce tunnel s'appuie sur un jeu de clés cryptographiques échangés précédemment entre le terminal 101 et le commutateur 104A (par exemple comme décrit précédemment en référence à la figure 6).

On suppose maintenant que le terminal 101 découvre un nouveau point d'accès 106B du même réseau d'accès NW2 auquel il souhaite se connecter pour continuer sa session de communication avec le réseau externe PDN 102, les points d'accès 106A et 106B étant reliés au même commutateur 104A.

Le terminal 101 déclenche donc une procédure de préparation du handover avec le point d'accès 106B (étape G10). Une telle procédure est connue en soi et n'est pas décrite davantage ici. Elle se déroule par exemple de façon identique à la procédure de préparation de handover décrite dans le document 3GPP TS 23.402.

A l'issue de cette procédure, le point d'accès 106B envoie un message OpenFlow PACKET_IN au dispositif de contrôle 105 (étape G20).

Le dispositif de contrôle 105 désencapsule ce message et vérifie les informations associées au terminal 101 dans sa base de données DB (étape G30).

Il détermine que le terminal 101 a déjà été authentifié et été autorisé à accéder au coeur de réseau IP 100, et met à jour sa base de données DB avec l'adresse IP du point d'accès 106B.

Il obtient par ailleurs dans la base de données l'adresse du commutateur 104A auquel le terminal 101 est associé ainsi que les clés cryptographiques utilisées dans le tunnel de communication IPsec déjà établi entre le terminal 101 et le commutateur 104A (paramètres de communication au sens de l'invention).

Conformément à l'invention, le dispositif de contrôle 105 utilise un unique tunnel de communication IPsec entre le terminal 101 et le commutateur 104A durant toute la session du terminal. Autrement dit, le même tunnel IPsec est utilisé entre le terminal 101 et le commutateur 104A, que le terminal 101 soit connecté au point d'accès 106A ou au point d'accès 106B.

Le dispositif de contrôle 105 élabore ensuite, via son module de contrôle 105B, une règle R11 de traitement de flux de données destinés au terminal 101 (i.e. pour la liaison descendante), destinée à être appliquée par le commutateur 104A, cette règle R11 comprenant l'adresse IP du point d'accès 106B, voire aussi de manière optionnelle les ports à utiliser sur ce point d'accès (étape G40).

Il élabore également des règles de traitement R12 et R13 des flux relatifs au terminal (i.e. pour la liaison montante et pour la liaison descendante), destinée à être appliquée par le point d'accès 106B, ces règles R12 et R13 comprenant respectivement l'adresse IP du commutateur 104A et l'adresse IP du terminal 101.

Le dispositif de contrôle 105 utilise la règle de traitement R11 pour commander le commutateur 104A. Plus précisément il transmet au commutateur 104A la règle de traitement R11 via son module de transmission 105C, dans un message OpenFlow PACKET_OUT (étape G50).

Sur réception de ce message, le commutateur 104A met à jour l'entrée de la table de flux associée au terminal 101 pour la liaison descendante (précédemment remplies avec l'adresse IP du point d'accès 106A) avec l'adresse IP du point d'accès 106B (paramètre de communication au sens de l'invention) transmis dans la règle de traitement R11 (étape G60). Cette table de flux est similaire ou identique aux tables FTAB décrites précédemment en référence à la figure 3.

Cette entrée commande le comportement du commutateur 104A en présence d'un flux de données destiné au terminal 101 en liaison descendante. Autrement dit, sur réception d'un flux de données destiné au terminal 101, le commutateur 104A route maintenant ce flux de données vers le point d'accès 106B.

Il convient de noter qu'aucune mise à jour de l'entrée de la table de flux du commutateur 104A pour la liaison montante n'est nécessaire.

De façon similaire, le dispositif de contrôle 105 utilise les règles de traitement R12 et R13 pour commander le point d'accès 106B. Plus précisément il transmet au point d'accès 106B les règles de traitement R12 et R13 par le biais de son module de transmission 105C, dans un message OpenFlow PACKET_OUT (étape G70).

Le point d'accès 106B crée une table de flux associée au terminal 101 comprenant une première entrée contenant l'adresse IP du commutateur 104A communiquée dans la règle R12 et une seconde entrée contenant l'adresse IP du terminal 101 communiquée dans la règle R13 (étape G80). Cette table de flux est similaire ou identique aux tables FTAB décrites précédemment en référence à la figure 3.

Ces entrées commandent le comportement du point d'accès 106B en présence d'un flux de données relatifs au terminal 101 en liaison montante et en liaison descendante. Autrement dit, sur réception d'un flux de données reçu en provenance du terminal 101, le point d'accès 106B route ce flux de données vers le commutateur 104A dont l'adresse IP lui a été communiquée dans la règle de traitement R12. De façon similaire, sur réception d'un flux de données destiné au terminal 101, le point d'accès 106B route ce flux de données vers le terminal 101 dont l'adresse IP lui a été fournie par la règle R13.

En variante, le point d'accès 106B utilise l'adresse IP fournie par le terminal 101 lors de la préparation du handover pour remplir la table de flux pour la liaison descendante.

Suite à la création de ces entrées, les messages relatifs au terminal 101 sont correctement routés vers leurs destinataires, au travers du point d'accès 106B, sans avoir besoin d'établir un nouveau tunnel IPsec entre le terminal 101 et le commutateur 104A. Le transfert de la session du terminal 101 initialement établie avec le point d'accès 106A vers le point d'accès 106B est réalisé sans interruption et sans perte de paquets. Il convient de noter que dans cet exemple, aucun changement n'est opéré sur l'interface S2b entre le commutateur 104 et la passerelle d'interconnexion 103 auquel il est relié (i.e. les mêmes tunnels GTP-u/PMIP sont utilisés).

La procédure de transfert illustrée maintenant à la **figure 9** permet de transférer une session active du terminal 101 d'un point d'accès initial du réseau NW2 vers un point d'accès cible du réseau NW2, les points d'accès initial et cibles étant reliés à des commutateurs différents. Par souci de simplification ici, ces commutateurs sont reliés à la même passerelle d'interconnexion.

Ainsi, on suppose que le terminal 101 est connecté au point d'accès 106A du réseau NW2 via lequel il accède au réseau externe PDN 102. Un tunnel de communication IPsec est établi entre le terminal 101 et le commutateur 104A au travers du point d'accès 106A ; ce tunnel s'appuie sur un jeu de clés cryptographiques échangés précédemment entre le terminal 101 et le commutateur 104A (par exemple comme décrit précédemment en référence à la figure 6). Par ailleurs un tunnel de communication est établi conformément au protocole GTP-u ou au protocole PMIP entre le commutateur 104A et une passerelle d'interconnexion 103A.

On suppose maintenant que le terminal 101 découvre un nouveau point d'accès 106C du même réseau d'accès NW2 auquel il souhaite se connecter pour continuer sa session de communication avec le réseau externe PDN 102, le point d'accès 106C étant relié à un commutateur 104C différent du commutateur 104A auquel est relié le point d'accès 106A. Un tunnel de communication est déjà établi conformément au protocole GTP-u ou au protocole PMIP entre le commutateur 104C et la passerelle d'interconnexion 103A.

Le terminal 101 déclenche donc une procédure de préparation du handover avec le point d'accès 106C (étape H10), comme décrit précédemment en référence à la figure 8.

A l'issue de cette procédure, le point d'accès 106C envoie un message OpenFlow PACKET_IN au dispositif de contrôle 105 (étape H20).

Le dispositif de contrôle 105 désencapsule ce paquet, vérifie les informations associées au terminal 101 dans sa base de données, et détermine que le terminal 101 a déjà été authentifié et autorisé à accéder au réseau (étape H30). Il met par ailleurs à jour sa base de données avec l'adresse IP du point d'accès 106C.

Puis, par l'intermédiaire de son module 105A, il requiert auprès de l'entité ePDG-c 109 de contrôle des commutateurs l'adresse d'un commutateur relié à ce point d'accès 106C (étape H40). L'entité ePDG-c 109 sélectionne le commutateur 104C qui est relié à la passerelle d'interconnexion 103A (selon des critères connus en soi) et transmet l'adresse IP du commutateur 104C au dispositif de contrôle 105 (paramètre de communication au sens de l'invention) et alloue à un tunnel de communication entre le commutateur 104C et la passerelle d'interconnexion 103A pour la liaison descendante, selon le protocole utilisé pour ce tunnel :
- un identifiant TEID de point d'extrémité du tunnel de communication si le protocole GTP est utilisé ; ou
- une clé d'encapsulation générique de routage ou clé GRE pour ce tunnel si le protocole PMIP est utilisé.

Le dispositif de contrôle 105 met à jour sa base de données avec l'adresse IP du commutateur 104C et l'identifiant TEID/la clé GRE et élabore, via son module de contrôle 105B, une règle de traitement R14 des flux de données destinés au terminal 101 (i.e. pour la liaison descendante), destinée à être appliquée par la passerelle d'interconnexion 103A. La règle R14 comprend :
- l'adresse IP du commutateur 104C ; et
- l'identifiant TEID de point d'extrémité ou la clé d'encapsulation de routage générique du tunnel de communication entre le commutateur 104C et la passerelle d'interconnexion 103A alloué(e) par l'entité de contrôle 109.

Le dispositif de contrôle 105 élabore par ailleurs, via son module de contrôle 105B, deux autres règles de traitement destinées à être appliquées par le commutateur 104C pour les flux relatifs au terminal 101 en liaison montante et descendante. Ces règles comprennent :
- une règle de traitement R15 de flux de données provenant du terminal (liaison montante) comprenant :
   ∘ l'adresse IP de la passerelle d'interconnexion 103A ; et
   ∘ l'identifiant TEID de point d'extrémité ou la clé d'encapsulation de routage générique du tunnel de communication entre le commutateur 104C et la passerelle d'interconnexion 103A. Cet identifiant est le même que celui qui avait été attribué précédemment pour identifier le tunnel de communication entre le commutateur 104A et la passerelle d'interconnexion 103A ;
- une règle de traitement R16 de flux de données à destination du terminal 101 (i.e. pour la liaison descendante) comprenant l'adresse IP du point d'accès 106C, voire aussi de manière optionnelle les ports de ce point d'accès 106C.

Enfin, le module de contrôle 105B du dispositif de contrôle 105 élabore deux règles de traitement destinées à être appliquées par le point d'accès 106C et comprenant :
- une règle R17 de traitement de flux de données destinés au terminal 101 (i.e. pour la liaison descendante) comprenant l'adresse IP du terminal 101 ; et
- une règle R18 de traitement de flux de données provenant du terminal (i.e. pour la liaison montante), comprenant l'adresse IP du commutateur 106C.

Le dispositif de contrôle 105 utilise la règle de traitement R14 pour commander la passerelle d'interconnexion 103A. Plus précisément il transmet à celle-ci la règle de traitement R14 via son module de transmission 105C, dans un message OpenFlow PACKET_MOD (étape H50).

Sur réception de ce message, la passerelle 103A met à jour l'entrée de la table de flux associée au terminal 101 pour la liaison descendante (précédemment remplies avec l'adresse IP du commutateur 104C) avec l'adresse IP du commutateur 104C et l'identifiant TEID ou la clé GRE de tunnel transmis dans la règle de traitement R14 (étape H60). Cette table de flux est similaire ou identique aux tables FTAB décrites précédemment en référence à la figure 3.

Cette entrée commande le comportement de la passerelle d'interconnexion 103A en présence d'un flux de données destiné au terminal 101 en liaison descendante. Autrement dit, sur réception d'un flux de données destiné au terminal 101, la passerelle d'interconnexion 103A route maintenant ce flux de données vers le commutateur 104C dans le tunnel de communication GTP ou PMIP identifié par le TEID transmis dans la règle R14.

De façon similaire, le dispositif de contrôle 105 utilise les règles de traitement R15 et R16 pour commander le commutateur 104C. Il transmet ces règles au commutateur 104C par le biais de son module de transmission 105C dans un message OpenFlow PACKET_OUT (étape H70).

Le commutateur 104C crée une table de flux associée au terminal 101 avec deux entrées comprenant respectivement les paramètres de communication transmis dans les règles de traitement R15 et R16(étape H80). Cette table de flux est similaire ou identique aux tables FTAB décrites précédemment en référence à la figure 3.

Ces entrées commandent le comportement du commutateur 104C en présence de flux de données relatifs au terminal 101 en liaison montante et en liaison descendante.

Enfin, le dispositif de contrôle 105 utilise les règles de traitement R17 et R18 pour commander le point d'accès 106C. Il transmet ces règles au point d'accès 106C par le biais de son module de transmission 105C dans un message OpenFlow PACKET_OUT (étape H90).

Le point d'accès 106C crée une table de flux associée au terminal 101 avec deux entrées comprenant respectivement les paramètres de communication transmis dans les règles de traitement R17 et R18 (étape H100). Cette table de flux est similaire ou identique aux tables FTAB décrites précédemment en référence à la figure 3.

Ces entrées commandent le comportement du point d'accès 106C en présence de flux de données relatifs au terminal 101 en liaison montante et en liaison descendante.

En variante, le point d'accès 106C utilise l'adresse IP fournie par le terminal 101 lors de la préparation du handover pour remplir la table de flux pour la liaison descendante.

Dès lors, la session active du terminal 101 est transférée vers le point d'accès 106C sans interruption ni perte de paquets grâce aux commandes du dispositif de contrôle 105. Les flux de données relatifs au terminal empruntent un tunnel de communication IPsec entre le terminal 101 et le commutateur 104C au travers du point d'accès 106C et un tunnel GTP-u ou PMIP entre le commutateur 104C et la passerelle d'interconnexion 103A.

Il convient de noter, que pour une gestion efficace des ressources du coeur de réseau IP, le commutateur 104A peut avantageusement supprimer sa table de flux associée au terminal 101. Ceci peut être réalisé suite à une commande en ce sens du dispositif de contrôle 105 ou à l'issue d'une temporisation associée à la table de flux. Si cette table de flux n'est plus utilisée pour le terminal 101 durant une période supérieure à la temporisation, elle est supprimée automatiquement par le commutateur 104A.

## Revendications

1. Dispositif de contrôle (105) d'un coeur de réseau IP (100) comprenant au moins une passerelle d'interconnexion (103) à au moins un réseau externe (102) de paquets de données et une pluralité de commutateurs (104,108), chaque commutateur étant relié à au moins un point d'accès (106) d'un réseau d'accès, le dispositif de contrôle comprenant :
- un module de communication (105A) apte à communiquer avec une entité (109) de contrôle des commutateurs et avec une entité (110) de contrôle de ladite au moins une passerelle d'interconnexion, le module de communication étant configuré pour obtenir desdites entités de contrôle des paramètres de communication destinés à être utilisés lors d'une session de communication d'un terminal, le terminal étant connecté à un point d'accès du réseau d'accès, ces paramètres de communication comprenant au moins un paramètre de communication relatif à un tunnel de communication entre un commutateur relié au point d'accès et le terminal établi pour ladite session selon un premier protocole de communication et au moins un paramètre de communication relatif à un tunnel de communication entre le commutateur et une passerelle d'interconnexion reliée à ce commutateur établi pour ladite session selon un second protocole de communication distinct du premier protocole ;
- un module de contrôle (105B), configuré pour élaborer, à partir d'au moins un paramètre de communication obtenu par le module de communication, au moins une règle de traitement (R1-R14) de flux de données relatifs à la session de communication, cette règle de traitement étant destinée à être appliquée par un équipement parmi ladite passerelle d'interconnexion, ledit commutateur et/ou le point d'accès ; et
- un module de transmission (105C) de ladite au moins une règle de traitement à cet équipement pour application sur les flux de données relatifs à ladite session de communication.

2. Dispositif de contrôle selon la revendication 1 dans lequel le module de communication est configuré pour obtenir de l'entité de contrôle des commutateurs au moins un paramètre de communication parmi :
- une adresse du commutateur relié au point d'accès auquel est connecté le terminal ;
- un identifiant d'un point d'extrémité ou une clé d'encapsulation de routage générique du tunnel de communication selon le second protocole entre le commutateur et la passerelle d'interconnexion ; et
- au moins une clé cryptographique associée au tunnel de communication selon le premier protocole entre le commutateur et le terminal.

3. Dispositif de contrôle selon la revendication 1 ou 2 dans lequel le module de communication est configuré pour obtenir de l'entité de contrôle de ladite au moins une passerelle d'interconnexion un identifiant d'un point d'extrémité du tunnel de communication selon le second protocole entre le commutateur et la passerelle d'interconnexion.

4. Dispositif de contrôle selon l'une quelconque des revendications 1 à 3 dans lequel au moins un paramètre de communication relatif au tunnel de communication selon le premier protocole ou au tunnel de communication selon le second protocole est invariant au cours de la session de communication du terminal.

5. Dispositif de contrôle selon l'une quelconque des revendications 1 à 4 dans lequel le module de contrôle est configuré pour élaborer, lors d'une procédure d'attachement du terminal au point d'accès du réseau d'accès :
- une règle de traitement (R1) des flux de données provenant du terminal, destinée à être appliquée par le commutateur et comprenant :
∘ une adresse de la passerelle d'interconnexion ; et
∘ un identifiant d'un point d'extrémité ou une clé d'encapsulation de routage générique du tunnel de communication selon le second protocole entre le commutateur et la passerelle d'interconnexion ;
- une règle de traitement (R2) des flux de données à destination du terminal, destinée à être appliquée par le commutateur et comprenant :
∘ une adresse du point d'accès ; et
∘ au moins une clé cryptographique associée au tunnel de communication selon le premier protocole entre le commutateur et le terminal ;
- une règle de traitement (R3) des flux de données provenant du terminal, destinée à être appliquée par la passerelle d'interconnexion et comprenant un identifiant d'un réseau externe de paquets de données ;
- une règle de traitement (R4) des flux de données à destination du terminal, destinée à être appliquée par la passerelle d'interconnexion et comprenant :
∘ une adresse du commutateur ; et
∘ un identifiant d'un point d'extrémité ou une clé d'encapsulation de routage générique du tunnel de communication selon le second protocole entre le commutateur et la passerelle d'interconnexion ;
- une règle de traitement (R5) des flux de données provenant du terminal, destinée à être appliquée par le point d'accès et comprenant une adresse du commutateur ; et
- une règle de traitement (R6) des flux de données à destination du terminal, destinée à être appliquée par le point d'accès et comprenant une adresse du terminal.

6. Dispositif de contrôle selon l'une quelconque des revendications 1 à 5 dans lequel le module de contrôle est configuré pour élaborer, lors d'une procédure de transfert de la session de communication du terminal d'un premier point d'accès à un second point d'accès du réseau d'accès, le premier point d'accès et le second point d'accès étant reliés au même commutateur :
- une règle de traitement (R11) des flux de données à destination du terminal, destinée à être appliquée par le commutateur et comprenant une adresse du second point d'accès ;
- une règle de traitement (R12) des flux de données provenant du terminal, destinée à être appliquée par le second point d'accès et comprenant une adresse du commutateur.

7. Dispositif de contrôle selon l'une quelconque des revendications 1 à 5 dans lequel le module de contrôle est configuré pour élaborer, lors d'une procédure de transfert de la session de communication du terminal d'un premier point d'accès relié à un premier commutateur vers un second point d'accès du réseau d'accès relié à un second commutateur :
- une règle de traitement (R14) des flux de données à destination du terminal, destinée à être appliquée par la passerelle d'interconnexion et comprenant :
∘ une adresse du second commutateur ; et
∘ un identifiant d'un point d'extrémité ou une clé d'encapsulation de routage générique du tunnel de communication selon le second protocole entre la passerelle d'interconnexion et le second commutateur ;
- une règle de traitement (R15) des flux de données provenant du terminal, destinée à être appliquée par le second commutateur et comprenant :
∘ une adresse de la passerelle d'interconnexion ; et
∘ un identifiant d'un point d'extrémité ou une clé d'encapsulation de routage générique du tunnel de communication selon le second protocole entre le second commutateur et la passerelle d'interconnexion ;
- une règle de traitement (R16) des flux de données à destination du terminal destinée à être appliquée par le second commutateur et comprenant l'adresse du second point d'accès ; et
- une règle de traitement (R18) des flux de données provenant du terminal, destinée à être appliquée par le second point d'accès et comprenant une adresse du second commutateur.

8. Dispositif de contrôle selon l'une quelconque des revendications 1 à 7 dans lequel :
- le module de contrôle est en outre configuré pour élaborer au moins une règle de traitement destinée à être appliquée par au moins une station de base d'un autre réseau d'accès à des flux de données relatifs à ladite session de communication ; et
- le module de transmission est configuré pour transmettre cette règle de traitement à ladite au moins une station de base pour application sur ces flux de données.

9. Dispositif de contrôle selon la revendication 8 dans lequel le module de contrôle est configuré pour élaborer, lors d'une procédure de transfert de la session de communication du terminal d'un point d'accès du réseau d'accès vers ladite station de base :
- une règle de traitement (R7) des flux de données provenant du terminal, destinée à être appliquée par la passerelle d'interconnexion et comprenant un identifiant d'un réseau externe de paquets de données ;
- une règle de traitement (R8) des flux de données à destination du terminal, destinée à être appliquée par la passerelle d'interconnexion et comprenant :
∘ une adresse de la station de base ; et
∘ un identifiant d'un point d'extrémité d'un tunnel de communication entre la passerelle d'interconnexion et la station de base établi pour la session du terminal selon le second protocole;
- une règle de traitement (R9) des flux de données provenant du terminal, destinée à être appliquée par la station de base et comprenant :
∘ une adresse de la passerelle d'interconnexion ; et
∘ un identifiant d'un point d'extrémité du tunnel de communication selon le second protocole entre la station de base et la passerelle d'interconnexion.

10. Dispositif de contrôle selon l'une quelconque des revendications 6, 7 et 9 dans lequel le module de contrôle est en outre configuré pour élaborer une règle de traitement (R13,R17,R10) des flux de données à destination du terminal destinée à être appliquée par le second point d'accès et comprenant une adresse du terminal.

11. Dispositif de contrôle selon la revendication 9 dans lequel le module de communication est en outre configuré pour communiquer avec une entité (112) de gestion de la mobilité dans ledit autre réseau d'accès et à obtenir de cette entité l'adresse de la station de base.

12. Dispositif de contrôle selon l'une quelconque des revendications 1 à 11 dans lequel :
- le réseau d'accès (NW1) est un réseau WLAN ; et/ou
- le premier protocole est un protocole IPsec ; et/ou
- le second protocole est un protocole PMIP (Proxy Mobile IP6 Protocol) ou GTP (GPRS Tunneling Protocol).

13. Entité (109) de contrôle d'une pluralité de commutateurs d'un coeur de réseau IP, chaque commutateur étant relié à une passerelle d'interconnexion avec un réseau externe de paquets de données et à au moins un point d'accès d'un réseau d'accès, cette entité de contrôle comprenant :
- un premier module d'allocation, configuré pour allouer à une session de communication d'un terminal connecté à un point d'accès du réseau d'accès, au moins un paramètre de communication relatif à un tunnel de communication entre un commutateur relié au point d'accès et le terminal établi pour cette session de communication selon un premier protocole de communication ; et
- un second module d'allocation, configuré pour allouer à cette session de communication, au moins un paramètre de communication relatif à un tunnel de communication entre le commutateur et une passerelle d'interconnexion reliée à ce commutateur établi pour cette session de communication selon un second protocole de communication distinct du premier protocole.

14. Entité de contrôle selon la revendication 13 comprenant en outre un module de sélection d'un commutateur du coeur de réseau IP pour la session de communication du terminal.

15. Coeur de réseau IP (100) comprenant :
- au moins une passerelle d'interconnexion avec au moins un réseau externe de paquets de données ;
- une pluralité de commutateurs reliés à ladite au moins une passerelle d'interconnexion et à des points d'accès d'un réseau d'accès ;
- une entité de contrôle de ladite au moins une passerelle d'interconnexion ;
- une entité de contrôle des commutateurs selon la revendication 13 ou 14 ; et
- au moins un dispositif de contrôle du coeur de réseau IP selon l'une quelconque des revendications 1 à 12, apte à commander la passerelle d'interconnexion, la pluralité de commutateurs, et les points d'accès du réseau d'accès.

16. Procédé de contrôle d'un coeur de réseau IP comprenant au moins une passerelle d'interconnexion (103) à au moins un réseau externe de paquets de données (102) et une pluralité de commutateurs (104,108), chaque commutateur étant relié à au moins un point d'accès d'un réseau d'accès, le procédé de contrôle étant destiné à être mis en oeuvre par un dispositif de contrôle (105) et comprenant :
∘ une étape de communication avec une entité de contrôle des commutateurs et/ou avec une entité de contrôle de ladite au moins une passerelle d'interconnexion, comprenant l'obtention en provenance de ces entités de contrôle de paramètres de communication destinés à être utilisés lors d'une session de communication d'un terminal, le terminal étant connecté à un point d'accès du réseau d'accès, ces paramètres de communication comprenant au moins un paramètre de communication relatif à un tunnel de communication entre un commutateur relié au point d'accès et le terminal établi pour ladite session selon un premier protocole de communication et au moins un paramètre de communication relatif à un tunnel de communication entre le commutateur et une passerelle d'interconnexion reliée à ce commutateur établi pour ladite session selon un second protocole de communication distinct du premier protocole ;
- une étape de contrôle comprenant l'élaboration, à partir d'au moins un paramètre de communication obtenu lors de l'étape de communication, d'au moins une règle de traitement de flux de données relatifs à la session de communication, cette règle de traitement étant destinée à être appliquée par un équipement parmi ladite passerelle d'interconnexion, ledit commutateur et/ou le point d'accès ; et
- une étape de transmission de ladite au moins une règle de traitement à cet équipement pour application sur les flux de données relatifs à ladite session de communication.

17. Programme d'ordinateur comportant des instructions pour l'exécution des étapes du procédé de contrôle selon la revendication 16 lorsque ledit programme est exécuté par un ordinateur.

18. Support d'enregistrement lisible par un ordinateur sur lequel est enregistré un programme d'ordinateur comprenant des instructions pour l'exécution des étapes du procédé de contrôle selon la revendication 16.

## Patentansprüche

1. Steuervorrichtung (105) eines IP-Kernnetzes (100), das mindestens ein Verbindungs-Gateway (103) zu mindestens einem externen Netz (102) von Datenpaketen und eine Vielzahl von Vermittlungsstellen (104, 108) enthält, wobei jede Vermittlungsstelle mit mindestens einem Zugangspunkt (106) eines Zugangsnetzes verbunden ist, wobei die Steuervorrichtung enthält:
- ein Kommunikationsmodul (105A), das mit einer Steuerentität (109) der Vermittlungsstellen und mit einer Steuerentität (110) des mindestens einen Verbindungs-Gateways kommunizieren kann, wobei das Kommunikationsmodul konfiguriert ist, von den Steuerentitäten Kommunikationsparameter zu erhalten, die dazu bestimmt sind, während einer Kommunikationssitzung eines Endgeräts verwendet zu werden, wobei das Endgerät an einen Zugangspunkt des Zugangsnetzes angeschlossen ist, wobei diese Kommunikationsparameter mindestens einen Kommunikationsparameter bezüglich eines Kommunikationstunnels zwischen einer mit dem Zugangspunkt verbundenen Vermittlungsstelle und dem Endgerät, der für die Sitzung gemäß einem ersten Kommunikationsprotokoll erstellt wird, und mindestens einen Kommunikationsparameter bezüglich eines Kommunikationstunnels zwischen der Vermittlungsstelle und einem mit dieser Vermittlungsstelle verbundenen Verbindungs-Gateway enthalten, der für diese Sitzung gemäß einem zweiten Kommunikationsprotokoll erstellt wird, das sich vom ersten Protokoll unterscheidet;
- ein Steuermodul (105B), das konfiguriert ist, ausgehend von mindestens einem vom Kommunikationsmodul erhaltenen Kommunikationsparameter mindestens eine Verarbeitungsregel (R1-R14) von Datenströmen bezüglich der Kommunikationssitzung zu erarbeiten, wobei diese Verarbeitungsregel dazu bestimmt ist, von einer Ausrüstung von dem Verbindungs-Gateway, der Vermittlungsstelle und/oder dem Zugangspunkt angewendet zu werden; und
- ein Übertragungsmodul (105C) der mindestens einen Verarbeitungsregel an diese Ausrüstung zur Anwendung an die Datenströme bezüglich der Kommunikationssitzung.

2. Steuervorrichtung nach Anspruch 1, wobei das Kommunikationsmodul konfiguriert ist, von der Steuerentität der Vermittlungsstellen mindestens einen Kommunikationsparameter zu erhalten von:
- einer Adresse der mit dem Zugangspunkt verbundenen Vermittlungsstelle, an den das Endgerät angeschlossen ist;
- einer Kennung eines Endpunkts oder einem Generic-Routing-Encapsulation-Schlüssel des Kommunikationstunnels gemäß dem zweiten Protokoll zwischen der Vermittlungsstelle und dem Verbindungs-Gateway; und
- mindestens einem kryptographischen Schlüssel, der dem Kommunikationstunnel gemäß dem ersten Protokoll zwischen der Vermittlungsstelle und dem Endgerät zugeordnet ist.

3. Steuervorrichtung nach Anspruch 1 oder 2, wobei das Kommunikationsmodul konfiguriert ist, von der Steuerentität des mindestens einen Verbindungs-Gateways eine Kennung eines Endpunkts des Kommunikationstunnels gemäß dem zweiten Protokoll zwischen der Vermittlungsstelle und dem Verbindungs-Gateway zu erhalten.

4. Steuervorrichtung nach einem der Ansprüche 1 bis 3, wobei mindestens ein Kommunikationsparameter bezüglich des Kommunikationstunnels gemäß dem ersten Protokoll oder des Kommunikationstunnels gemäß dem zweiten Protokoll während der Kommunikationssitzung des Endgeräts unveränderlich ist.

5. Steuervorrichtung nach einem der Ansprüche 1 bis 4, wobei das Steuermodul konfiguriert ist, bei einer Anknüpfungsprozedur des Endgeräts an den Zugangspunkt des Zugangsnetzes zu erarbeiten:
- eine Verarbeitungsregel (R1) der vom Endgerät kommenden Datenströme, die dazu bestimmt ist, von der Vermittlungsstelle angewendet zu werden und enthält:
∘ eine Adresse des Verbindungs-Gateways; und
∘ eine Kennung eines Endpunkts oder einen Generic-Routing-Encapsulation-Schlüssel des Kommunikationstunnels gemäß dem zweiten Protokoll zwischen der Vermittlungsstelle und dem Verbindungs-Gateway;
- eine Verarbeitungsregel (R2) der für das Endgerät bestimmten Datenströme, die dazu bestimmt ist, durch die Vermittlungsstelle angewendet zu werden und enthält:
∘ eine Adresse des Zugangspunkts; und
∘ mindestens einen kryptographischen Schlüssel, der dem Kommunikationstunnel gemäß dem ersten Protokoll zwischen der Vermittlungsstelle und dem Endgerät zugeordnet ist;
- eine Verarbeitungsregel (R3) der vom Endgerät kommenden Datenströme, die dazu bestimmt ist, vom Verbindungs-Gateway angewendet zu werden und eine Kennung eines externen Netzes von Datenpaketen enthält;
- eine Verarbeitungsregel (R4) der für das Endgerät bestimmten Datenströme, die dazu bestimmt ist, vom Verbindungs-Gateway angewendet zu werden, und enthält:
∘ eine Adresse der Vermittlungsstelle; und
∘ eine Kennung eines Endpunkts oder einen Generic-Routing-Encapsulation-Schlüssel des Kommunikationstunnels gemäß dem zweiten Protokoll zwischen der Vermittlungsstelle und dem Verbindungs-Gateway;
- eine Verarbeitungsregel (R5) der vom Endgerät kommenden Datenströme, die dazu bestimmt ist, vom Zugangspunkt angewendet zu werden und eine Adresse der Vermittlungsstelle enthält; und
- eine Verarbeitungsregel (R6) der für das Endgerät bestimmten Datenströme, die dazu bestimmt ist, vom Zugangspunkt angewendet zu werden und eine Adresse des Endgeräts enthält.

6. Steuervorrichtung nach einem der Ansprüche 1 bis 5, wobei das Steuermodul konfiguriert ist, bei einer Transferprozedur der Kommunikationssitzung des Endgeräts von einem ersten Zugangspunkt zu einem zweiten Zugangspunkt des Zugangsnetzes, wobei der erste Zugangspunkt und der zweite Zugangspunkt mit der gleichen Vermittlungsstelle verbunden sind, zu erarbeiten:
- eine Verarbeitungsregel (R11) der für das Endgerät bestimmten Datenströme, die dazu bestimmt ist, von der Vermittlungsstelle angewendet zu werden und eine Adresse des zweiten Zugangspunkts enthält;
- eine Verarbeitungsregel (R12) der vom Endgerät kommenden Datenströme, die dazu bestimmt ist, vom zweiten Zugangspunkt angewendet zu werden und eine Adresse der Vermittlungsstelle enthält.

7. Steuervorrichtung nach einem der Ansprüche 1 bis 5, wobei das Steuermodul konfiguriert ist, bei einer Transferprozedur der Kommunikationssitzung des Endgeräts von einem mit einer ersten Vermittlungsstelle verbundenen ersten Zugangspunkt zu einem mit einer zweiten Vermittlungsstelle verbundenen Zugangspunkt des Zugangsnetzes zu erarbeiten:
- eine Verarbeitungsregel (R14) der für das Endgerät bestimmten Datenströme, die dazu bestimmt ist, vom Verbindungs-Gateway angewendet zu werden und enthält:
∘ eine Adresse der zweiten Vermittlungsstelle; und
∘ eine Kennung eines Endpunkts oder einen Generic-Routing-Encapsulation-Schlüssel des Kommunikationstunnels gemäß dem zweiten Protokoll zwischen dem Verbindungs-Gateway und der zweiten Vermittlungsstelle;
- eine Verarbeitungsregel (R15) der vom Endgerät kommenden Datenströme, die dazu bestimmt ist, von der zweiten Vermittlungsstelle angewendet zu werden und enthält:
∘ eine Adresse des Verbindungs-Gateways; und
∘ eine Kennung eines Endpunkts oder einen Generic-Routing-Encapsulation-Schlüssel des Kommunikationstunnels gemäß dem zweiten Protokoll zwischen der zweiten Vermittlungsstelle und dem Verbindungs-Gateway;
- eine Verarbeitungsregel (R16) der für das Endgerät bestimmten Datenströme, die dazu bestimmt ist, von der zweiten Vermittlungsstelle angewendet zu werden und die Adresse des zweiten Zugangspunkts enthält; und
- eine Verarbeitungsregel (R18) der vom Endgerät kommenden Datenströme, die dazu bestimmt ist, vom zweiten Zugangspunkt angewendet zu werden und eine Adresse der zweiten Vermittlungsstelle enthält.

8. Steuervorrichtung nach einem der Ansprüche 1 bis 7, wobei:
- das Steuermodul außerdem konfiguriert ist, mindestens eine Verarbeitungsregel zu erarbeiten, die dazu bestimmt ist, von mindestens einer Basisstation eines anderen Zugangsnetzes zu Datenströmen bezüglich der Kommunikationssitzung angewendet zu werden; und
- das Übertragungsmodul konfiguriert ist, diese Verarbeitungsregel zur Anwendung an diese Datenströme an die mindestens eine Basisstation zu übertragen.

9. Steuervorrichtung nach Anspruch 8, wobei das Steuermodul konfiguriert ist, bei einer Transferprozedur der Kommunikationssitzung des Endgeräts von einem Zugangspunkt des Zugangsnetzes zur Basisstation zu erarbeiten:
- eine Verarbeitungsregel (R7) der vom Endgerät kommenden Datenströme, die dazu bestimmt ist, vom Verbindungs-Gateway angewendet zu werden und eine Kennung eines externen Netzes von Datenpaketen enthält;
- eine Verarbeitungsregel (R8) der für das Endgerät bestimmten Datenströme, die dazu bestimmt ist, vom Verbindungs-Gateway angewendet zu werden und enthält:
o eine Adresse der Basisstation; und
o eine Kennung eines Endpunkts eines Kommunikationstunnels zwischen dem Verbindungs-Gateway und der Basisstation, der für die Sitzung des Endgeräts gemäß dem zweiten Protokoll erstellt wird;
- eine Verarbeitungsregel (R9) der vom Endgerät kommenden Datenströme, die dazu bestimmt ist, von der Basisstation angewendet zu werden und enthält:
∘ eine Adresse des Verbindungs-Gateways; und
∘ eine Kennung eines Endpunkts des Kommunikationstunnels gemäß dem zweiten Protokoll zwischen der Basisstation und dem Verbindungs-Gateway.

10. Steuervorrichtung nach einem der Ansprüche 6, 7 und 9, wobei das Steuermodul außerdem konfiguriert ist, eine Verarbeitungsregel (R13, R17, R10) der für das Endgerät bestimmten Datenströme zu erarbeiten, die dazu bestimmt ist, vom zweiten Zugangspunkt angewendet zu werden und eine Adresse des Endgeräts enthält.

11. Steuervorrichtung nach Anspruch 9, wobei das Kommunikationsmodul außerdem konfiguriert ist, mit einer Verwaltungsentität (112) der Mobilität im anderen Zugangsnetz zu kommunizieren und von dieser Entität die Adresse der Basisstation zu erhalten.

12. Steuervorrichtung nach einem der Ansprüche 1 bis 11, wobei:
- das Zugangsnetz (NW1) ein WLAN-Netz ist; und/oder
- das erste Protokoll ein IPsec-Protokoll ist; und/oder
- das zweite Protokoll ein PMIP- (Proxy Mobile IP6 Protocol) oder GTP-Protokoll (GPRS Tunneling Protocol) ist.

13. Steuerentität (109) einer Vielzahl von Vermittlungsstellen eines IP-Kernnetzes, wobei jede Vermittlungsstelle mit einem Verbindungs-Gateway mit einem externen Netz von Datenpaketen und mit mindestens einem Zugangspunkt eines Zugangsnetzes verbunden ist, wobei diese Steuerentität enthält:
- ein erstes Zuweisungsmodul, das konfiguriert ist, einer Kommunikationssitzung eines an einen Zugangspunkt des Zugangsnetzes angeschlossenen Endgeräts mindestens einen Kommunikationsparameter bezüglich eines Kommunikationstunnels zwischen einer mit dem Zugangspunkt verbundenen Vermittlungsstelle und dem Endgerät zuzuweisen, der für diese Kommunikationssitzung gemäß einem ersten Kommunikationsprotokoll erstellt wird; et
- ein zweites Zuweisungsmodul, das konfiguriert ist, dieser Kommunikationssitzung mindestens einen Kommunikationsparameter bezüglich eines Kommunikationstunnels zwischen der Vermittlungsstelle und einem mit dieser Vermittlungsstelle verbundenen Verbindungs-Gateway zuzuweisen, der für diese Kommunikationssitzung gemäß einem zweiten Kommunikationsprotokoll anders als das erste Protokoll erstellt wird.

14. Steuerentität nach Anspruch 13, die außerdem ein Auswahlmodul einer Vermittlungsstelle des IP-Kernnetzes für die Kommunikationssitzung des Endgeräts enthält.

15. IP-Kernnetz (100), das enthält:
- mindestens ein Verbindungs-Gateway mit mindestens einem externen Netz von Datenpaketen;
- eine Vielzahl von Vermittlungsstellen, die mit dem mindestens einen Verbindungs-Gateway und mit Zugangspunkten eines Zugangsnetzes verbunden sind;
- eine Steuerentität des mindestens einen Verbindungs-Gateways;
- eine Steuerentität der Vermittlungsstellen nach Anspruch 13 oder 14; und
- mindestens eine Steuervorrichtung des IP-Kernnetzes nach einem der Ansprüche 1 bis 12, die das Verbindungs-Gateway, die Vielzahl von Vermittlungsstellen und die Zugangspunkte des Zugangsnetzes steuern kann.

16. Steuerverfahren eines IP-Kernnetzes, das mindestens ein Verbindungs-Gateway (103) mit mindestens einem externen Netz von Datenpaketen (102) und eine Vielzahl von Vermittlungsstellen (104, 108) enthält, wobei jede Vermittlungsstelle mit mindestens einem Zugangspunkt eines Zugangsnetzes verbunden ist, wobei das Steuerverfahren dazu bestimmt ist, von einer Steuervorrichtung (105) durchgeführt zu werden und enthält:
- einen Schritt der Kommunikation mit einer Steuerentität der Vermittlungsstelle und/oder mit einer Steuerentität des mindestens einen Verbindungs-Gateways, der den Erhalt von diesen Steuerentitäten von Kommunikationsparametern enthält, die dazu bestimmt sind, bei einer Kommunikationssitzung eines Endgeräts verwendet zu werden, wobei das Endgerät an einen Zugangspunkt des Zugangsnetzes angeschlossen ist, wobei diese Kommunikationsparameter mindestens einen Kommunikationsparameter bezüglich eines Kommunikationstunnels zwischen einer mit dem Zugangspunkt verbundenen Vermittlungsstelle und dem Endgerät, der für die Sitzung gemäß einem ersten Kommunikationsprotokoll erstellt wird, und mindestens einem Kommunikationsparameter bezüglich eines Kommunikationstunnels zwischen der Vermittlungsstelle und einem mit dieser Vermittlungsstelle verbundenen Verbindungs-Gateway enthält, der für die Sitzung gemäß einem zweiten Kommunikationsprotokoll unterschiedlich zum ersten Protokoll erstellt wird;
- einen Steuerschritt, der die Erarbeitung, ausgehend von mindestens einem im Kommunikationsschritt erhaltenen Kommunikationsparameter, mindestens einer Verarbeitungsregel von Datenströmen bezüglich der Kommunikationssitzung enthält, wobei diese Verarbeitungsregel dazu bestimmt ist, von einer Ausrüstung von dem Verbindungs-Gateway, der Vermittlungsstelle und/oder dem Zugangspunkt angewendet zu werden; und
- einen Schritt der Übertragung der mindestens einen Verarbeitungsregel an diese Ausrüstung zur Anwendung an die Datenströme bezüglich dieser Kommunikationssitzung.

17. Computerprogramm, das Anweisungen zur Ausführung der Schritte des Steuerverfahrens nach Anspruch 16 enthält, wenn das Programm von einem Computer ausgeführt wird.

18. Computerlesbarer Speicherträger, auf dem ein Computerprogramm gespeichert ist, das Anweisungen zur Ausführung der Schritte des Steuerverfahrens nach Anspruch 16 enthält.

## Claims

1. Device for control (105) of an IP network core (100) comprising at least one interconnection gateway (103) to at least one external data packet network (102) and a plurality of switches (104,108), each switch being linked to at least one access point (106) of an access network, the control device comprising:
- a communication module (105A) able to communicate with an entity (109) for control of the switches and with an entity (110) for control of said at least one interconnection gateway, the communication module being configured to obtain from said control entities communication parameters intended to be used during a communication session of a terminal, the terminal being connected to an access point of the access network, these communication parameters comprising at least one communication parameter relating to a communication tunnel between a switch linked to the access point and the terminal established for said session according to a first communication protocol and at least one communication parameter relating to a communication tunnel between the switch and an interconnection gateway linked to this switch established for said session according to a second communication protocol distinct from the first protocol;
- a control module (105B), configured to formulate, on the basis of at least one communication parameter obtained by the communication module, at least one rule (R1-R14) for processing data streams relating to the communication session, this processing rule being intended to be applied by an equipment item from among said interconnection gateway, said switch and/or the access point; and
- a transmission module (105C) for transmitting said at least one processing rule to this equipment item for application to the data streams relating to said communication session.

2. Control device according to Claim 1, in which the communication module is configured to obtain from the control entity for the switches at least one communication parameter from among:
- an address of the switch linked to the access point to which the terminal is connected;
- an identifier of an end point or a generic routing encapsulation key of the communication tunnel according to the second protocol between the switch and the interconnection gateway; and
- at least one cryptographic key associated with the communication tunnel according to the first protocol between the switch and the terminal.

3. Control device according to Claim 1 or 2, in which the communication module is configured to obtain from the control entity for said at least one interconnection gateway an identifier of an end point of the communication tunnel according to the second protocol between the switch and the interconnection gateway.

4. Control device according to any one of Claims 1 to 3, in which at least one communication parameter relating to the communication tunnel according to the first protocol or to the communication tunnel according to the second protocol is invariant in the course of the communication session of the terminal.

5. Control device according to any one of Claims 1 to 4, in which the control module is configured to formulate, during a procedure for attaching the terminal to the access point of the access network:
- a rule (R1) for processing the data streams originating from the terminal, intended to be applied by the switch and comprising:
∘ an address of the interconnection gateway; and
∘ an identifier of an end point or a generic routing encapsulation key of the communication tunnel according to the second protocol between the switch and the interconnection gateway;
- a rule (R2) for processing the data streams destined for the terminal, intended to be applied by the switch and comprising:
∘ an address of the access point; and
∘ at least one cryptographic key associated with the communication tunnel according to the first protocol between the switch and the terminal;
- a rule (R3) for processing the data streams originating from the terminal, intended to be applied by the interconnection gateway and comprising an identifier of an external data packet network;
- a rule (R4) for processing the data streams destined for the terminal, intended to be applied by the interconnection gateway and comprising:
∘ an address of the switch; and
∘ an identifier of an end point or a generic routing encapsulation key of the communication tunnel according to the second protocol between the switch and the interconnection gateway;
- a rule (R5) for processing the data streams originating from the terminal, intended to be applied by the access point and comprising an address of the switch; and
- a rule (R6) for processing the data streams destined for the terminal, intended to be applied by the access point and comprising an address of the terminal.

6. Control device according to any one of Claims 1 to 5, in which the control module is configured to formulate, during a procedure for transferring the communication session of the terminal from a first access point to a second access point of the access network, the first access point and the second access point being linked to the same switch:
- a rule (R11) for processing the data streams destined for the terminal, intended to be applied by the switch and comprising an address of the second access point;
- a rule (R12) for processing the data streams originating from the terminal, intended to be applied by the second access point and comprising an address of the switch.

7. Control device according to any one of Claims 1 to 5, in which the control module is configured to formulate, during a procedure for transferring the communication session of the terminal from a first access point linked to a first switch to a second access point of the access network linked to a second switch:
- a rule (R14) for processing the data streams destined for the terminal, intended to be applied by the interconnection gateway and comprising:
∘ an address of the second switch; and
∘ an identifier of an end point or a generic routing encapsulation key of the communication tunnel according to the second protocol between the interconnection gateway and the second switch;
- a rule (R15) for processing the data streams originating from the terminal, intended to be applied by the second switch and comprising:
∘ an address of the interconnection gateway; and
∘ an identifier of an end point or a generic routing encapsulation key of the communication tunnel according to the second protocol between the second switch and the interconnection gateway;
- a rule (R16) for processing the data streams destined for the terminal, intended to be applied by the second switch and comprising the address of the second access point; and
- a rule (R18) for processing the data streams originating from the terminal, intended to be applied by the second access point and comprising an address of the second switch.

8. Control device according to any one of Claims 1 to 7, in which:
- the control module is furtherca configured to formulate at least one processing rule intended to be applied by at least one base station of another network for access to data streams relating to said communication session; and
- the transmission module is configured to transmit this processing rule to said at least one base station for application to these data streams.

9. Control device according to Claim 8, in which the control module is configured to formulate, during a procedure for transferring the communication session of the terminal of an access point of the access network to said base station:
- a rule (R7) for processing the data streams originating from the terminal, intended to be applied by the interconnection gateway and comprising an identifier of an external data packet network;
- a rule (R8) for processing the data streams destined for the terminal, intended to be applied by the interconnection gateway and comprising:
∘ an address of the base station; and
∘ an identifier of an end point of a communication tunnel between the interconnection gateway and the base station, established for the session of the terminal according to the second protocol;
- a rule (R9) for processing the data streams originating from the terminal, intended to be applied by the base station and comprising:
∘ an address of the interconnection gateway; and
∘ an identifier of an end point of the communication tunnel according to the second protocol between the base station and the interconnection gateway.

10. Control device according to any one of Claims 6, 7 and 9, in which the control module is further configured to formulate a rule (R13,R17,R10) for processing the data streams destined for the terminal, intended to be applied by the second access point and comprising an address of the terminal.

11. Control device according to Claim 9, in which the communication module is further configured to communicate with an entity (112) for managing mobility in said other access network and obtain from this entity the address of the base station.

12. Control device according to any one of Claims 1 to 11, in which:
- the access network (NW1) is a WLAN network; and/or
- the first protocol is an IPsec protocol; and/or
- the second protocol is a PMIP (Proxy Mobile IP6 Protocol) or GTP (GPRS Tunnelling Protocol) protocol.

13. Entity (109) for control of a plurality of switches of an IP network core, each switch being linked to a gateway for interconnection with an external data packet network and to at least one access point of an access network, this control entity comprising:
- a first allocation module, configured to allocate to a communication session of a terminal connected to an access point of the access network, at least one communication parameter relating to a communication tunnel between a switch linked to the access point and the terminal established for this communication session according to a first communication protocol; and
- a second allocation module, configured to allocate to this communication session, at least one communication parameter relating to a communication tunnel between the switch and an interconnection gateway linked to this switch established for this communication session according to a second communication protocol distinct from the first protocol.

14. Control entity according to Claim 13, further comprising a module for selecting a switch of the IP network core for the communication session of the terminal.

15. IP network core (100) comprising:
- at least one gateway for interconnection with at least one external data packet network;
- a plurality of switches linked to said at least one interconnection gateway and to access points of an access network;
- a control entity for said at least one interconnection gateway;
- a control entity for the switches according to Claim 13 or 14; and
- at least one device for control of the IP network core according to any one of Claims 1 to 12, able to command the interconnection gateway, the plurality of switches, and the access points of the access network.

16. Method of control of an IP network core comprising at least one interconnection gateway (103) to at least one external data packet network (102) and a plurality of switches (104,108), each switch being linked to at least one access point of an access network, the control method being intended to be implemented by a control device (105) and comprising:
∘ a step of communication with a control entity for the switches and/or with a control entity for said at least one interconnection gateway, comprising the obtaining originating from these control entities of communication parameters intended to be used during a communication session of a terminal, the terminal being connected to an access point of the access network, these communication parameters comprising at least one communication parameter relating to a communication tunnel between a switch linked to the access point and the terminal established for said session according to a first communication protocol and at least one communication parameter relating to a communication tunnel between the switch and an interconnection gateway linked to this switch established for said session according to a second communication protocol distinct from the first protocol;
- a control step comprising the formulation, on the basis of at least one communication parameter obtained during the communication step, of at least one rule for processing data streams relating to the communication session, this processing rule being intended to be applied by an equipment item from among said interconnection gateway, said switch and/or the access point; and
- a step of transmitting said at least one processing rule to this equipment item for application to the data streams relating to said communication session.

17. Computer program comprising instructions for the execution of the steps of the control method according to Claim 16 when said program is executed by a computer.

18. Recording medium readable by a computer on which is recorded a computer program comprising instructions for the execution of the steps of the control method according to Claim 16.
